# EUROPÄISCHE PATENTSCHRIFT

(11) **EP 3 696 408 B1**
(45) Veröffentlichungstag und Bekanntmachung des Hinweises auf die Patenterteilung: **07.06.2023**
(21) Anmeldenummer: 19217120.5
(22) Anmeldetag: 17.12.2019
(51) Int. Cl.: F04B 9/02, F04B 15/08, F04B 53/14, F17C 5/02

(54) **KOLBENPUMPE**
PISTON PUMP
POMPE À PISTON

(30) Priorität: 07.02.2019 DE 102019201558
(43) Veröffentlichungstag der Anmeldung: 19.08.2020
(73) Patentinhaber: CleanTech Swiss AG, 8832 Wollerau SZ (CH)
(72) Erfinder: TILHOF, Eckhard, 8852 Altendorf (CH)
(74) Vertreter: Gille Hrabal Partnerschaftsgesellschaft mbB Patentanwälte

(56) Entgegenhaltungen:
- EP-A2- 2 458 214
- WO-A1-2016/074924
- CA-A1- 2 486 223
- DE-A1- 3 812 627
- US-A1- 2012 058 000

## Beschreibung

Die Erfindung betrifft eine Kolbenpumpe zum Pumpen eines Flüssiggaskraftstoffes, insbesondere LPG für eine Abfüllstation für Gasflaschen. Die Erfindung betrifft außerdem eine Abfüllstation mit Kolbenpumpe.

Die Kolbenpumpe umfasst einen Zylinder und einen Kolben. Der Kolben ist im Zylinder angeordnet, um zusammen mit dem Zylinder einen zylindrischen Hohlraum zu begrenzen, dessen Volumen sich durch eine axiale Bewegung des Kolbens innerhalb des Zylinders in eine Ausstoßrichtung verkleinert und in eine entgegengesetzte Ansaugrichtung vergrößert. Der zylindrische Hohlraum ist über ein Einlassventil mit einem Einlass und über ein Auslassventil mit einem Auslass verbunden. Ein Antrieb ist vorgesehen, der über eine Kurbelwelle, eine Pleuelstange und eine längliche Zylinderstange den Kolben für die axiale Bewegung antreiben kann.

Aufgrund der sehr geringen Viskosität von Flüssiggaskraftstoffen wie LPG werden üblicherweise Flüssiggaskraftstoffe in der flüssigen Phase mit Flügelradpumpen oder Seitenkanalpumpen gepumpt, weil diese Pumpen keine oder nur geringe Anforderungen an innere Dichtungen stellen. Jedoch kann ein Flüssiggaskraftstoff in der gasförmigen Phase durch die vorgenannten Pumpentypen in der Regel nicht gepumpt werden und es treten häufig Störungen auf, wenn es zu Blasenbildung oder Gaseinschlüssen in der flüssigen Phase des zu pumpenden Flüssiggaskraftstoffes kommt. Bei Kolbenpumpen sind funktionsbedingt innere Dichtungen erforderlich. Aus den Druckschriften WO9102160A1 und CN107829898A sind Kolbenpumpen bekannt. Die Fa. Hangzhou ChengYingYi Energy Technology Co., Ltd. aus China bietet Kolbenpumpen für die Petrochemie an.

Eine Abfüllstation für Gasflaschen ist aus der Druckschrift WO 2016/074924 A1 bekannt. Diese Abfüllstation erlaubt ein automatisiertes Wiederbefüllen von Gasflaschen, ohne dass dafür eine Aufsicht durch fachlich geschultes Personal erforderlich wäre. Bei einer solchen Abfüllstation besteht Bedarf, Gas, insbesondere LPG, aus einer Gasflasche absaugen zu können und Gas in eine Gasflasche hineinpumpen zu können. Eine Armatur einer Gasflasche, die eine automatisierte Wiederbefüllung von Gasflaschen ermöglicht, geht aus der Druckschrift WO 2016/074923 A1 hervor.

Die Druckschrift US2012/058000A1 offenbart eine Dichtungsanordnung für eine Kolbenpumpe zum Bereitstellen einer Dichtung um einen Stab umfassend ein Dichtungsgehäuse und einen Einbaudichtsatz, der in dem Dichtungsgehäuse angeordnet ist. Die Druckschrift EP2458214A2 offenbart eine Hubkolbenvorrichtung, wobei ein Zustandsüberwachungssystem zur Überwachung der Hubkolbenvorrichtung vorgesehen ist. Die Druckschrift CA2486223A1 offenbart eine Zylinderblockbaugruppe für eine Hubkolbenpumpe umfasst einen Blockkörper mit einer Kolbenkammer, die einen Kolben der Hubkolbenpumpe aufnimmt, sowie eine Einlassventilanordnung und eine Auslassventilanordnung. Die Druckschrift WO2016/074924A1 offenbart eine Abfüllstation, die ein automatisiertes Wiederbefüllen einer Gasflasche ermöglicht. Die Druckschrift DE3812627A1 offenbart eine Dichtungsvorrichtung für eine Pumpe mit hin- und hergehendem Pumpelement.

Eine Gasflasche ist ein in der Regel aus Metall, regelmäßig aus Stahl, oder Glasfaser verstärkten Verbundwerkstoffen oder Aluminium oder einer Kombination aus Stahl bzw. Aluminium und Glasfaser verstärkten Verbundwerkstoffen bestehender Druckbehälter für den Transport und die Lagerung von unter Druck stehenden Gasen. Eine solche Gasflasche kann ein Volumen von mehr als 100 Litern aufweisen. Der Nenndruck kann mehrere Hundert bar betragen.

Es ist Aufgabe der Erfindung, eine weiterentwickelte Kolbenpumpe zum Pumpen eines Flüssiggaskraftstoffes, insbesondere LPG, bereitzustellen, die bevorzugt für einen Einsatz in einer Abfüllstation für Gasflaschen besonders gut geeignet ist.

Zur Lösung der Aufgabe dienen eine Kolbenpumpe gemäß dem Hauptanspruch sowie eine Abfülleinrichtung für Gasflaschen mit einer Kolbenpumpe gemäß dem Nebenanspruch. Vorteilhafte Ausführungsformen ergeben sich aus den Unteransprüchen.

Zur Lösung der Aufgabe dient eine Kolbenpumpe zum Pumpen eines Flüssiggaskraftstoffes, insbesondere LPG. Die Kolbenpumpe umfasst einen oder mehrere Zylinder und einen oder mehrere Kolben.

Der Kolben ist im Zylinder angeordnet, um zusammen mit dem Zylinder einen zylindrischen Hohlraum zu begrenzen, dessen Volumen sich durch eine axiale Bewegung des Kolbens innerhalb des Zylinders in eine Ausstoßrichtung verkleinert und in eine entgegengesetzte Ansaugrichtung vergrößert. Der zylindrische Hohlraum ist über ein Einlassventil mit einem Einlass und über ein Auslassventil mit einem Auslass verbunden. Ein Antrieb ist vorgesehen, der über eine Kurbelwelle, eine Pleuelstange und eine längliche Zylinderstange den Kolben für die axiale Bewegung antreiben kann. Die Zylinderstange weist ein radiales Führungselement auf. Eine Führung ist zum axialen, linearen Führen des Führungselements eingerichtet, so dass die Zylinderstange sich nur axial in die Ausstoßrichtung oder die Ansaugrichtung bewegen kann.

Erfindungsgemäß ist die Führung in Ausstoßrichtung geschlossen und in Ansaugrichtung offen.

Durch das radiale Führungselement der Zylinderstange und das axiale, lineare Führen des Führungselements durch die Führung kann eine besonders hohe Dichtwirkung des Kolbens gegenüber dem Zylinder erzielt werden. Eine besonders hohe Pumprate von bevorzugt bis zu 70 Liter pro Minute LPG-Kraftstoff in der Flüssigphase kann dadurch mit einer besonders hohen Betriebssicherheit realisiert werden. Darüber hinaus kann erreicht werden, dass mit der Kolbenpumpe LPG-Kraftstoff sowohl in der Flüssigphase als auch in der Gasphase besonders störungsfrei und sicher gepumpt werden kann. Ein störungsfreier Betrieb kann auch dann gewährleistet werden, wenn während des Pumpens von LPG-Kraftstoff in der Flüssigphase unerwartet Gasblasen im gepumpten Flüssiggaskraftstoff auftreten oder der zu pumpende Flüssiggaskraftstoff plötzlich vollständig von der Flüssigphase in die Gasphase wechselt oder umgekehrt. Ferner kann das Brandrisiko infolge von unplanmäßig austretendem Flüssiggaskraftstoff beispielsweise durch Spalte an Bauteilschnittstellen, also nicht aus einem Auslass, reduziert werden. Im Übrigen wird ein besonders betriebssicherer Einsatz eines Elektromotors für das Antreiben der Pumpe mit vergleichsweise geringem Herstellungsaufwand ermöglicht.

Ein Zylinder ist ein zylinderförmiger Raum, in dem sich der Kolben axial hin und her bzw. auf und ab bewegen kann. Um einen zylindrischen Hohlraum zu begrenzen, dichtet der Kolben den Zylinder ab.

Ein Kolben zum Pumpen von Flüssiggaskraftstoff weist eine Dichtung wie z.B. einen Dichtring zum Abdichten von Flüssiggaskraftstoff auf. Bevorzugt dichtet die Dichtung oder der mindestens eine Dichtring Flüssiggaskraftstoff sowohl in der flüssigen als auch in der gasförmigen Phase gegenüber dem Zylinder ab. Ein Kolben hat allgemein eine scheibenartige Form, dessen äußere Mantelfläche an der inneren Mantelfläche des Zylinders anliegt, wobei beide Mantelflächen miteinander abgedichtet sind. Vorzugsweise ist die Dichtung an der äußeren Mantelfläche des Kolbens angeordnet und dort befestigt und/oder radial eingelassen. Wenn der Kolben sich axial innerhalb des Zylinders bewegt, bleibt der abdichtende Effekt auch während der axialen Bewegung erhalten, so dass der Flüssiggaskraftstoff in dem Zylinderraum angesaugt oder ausgedrückt werden kann.

Der zylindrische Hohlraum kann vorliegend dem axialen Abschnitt des Zylinders entsprechen, der sich von einer axialen Kolbenoberfläche, die beim Pumpen mit dem zu pumpenden Flüssiggaskraftstoff in unmittelbaren Kontakt steht, bis zum Zylinderende in Ausstoßrichtung erstreckt.

Eine Zylinderstange ist ein längliches Verbindungselement, das sich zumindest teilweise in den Zylinder erstreckt. Eine Zylinderstange ist mit dem Kolben verbunden. Eine Zylinderstange ist insbesondere in Ansaugrichtung vom Kolben angeordnet. Eine Zylinderstange, die ein radiales Führungselement aufweist, ist bewegungsfest mit dem Führungselement verbunden. Das radiale Führungselement erstreckt sich in radialer Richtung von der Zylinderstange. Das radiale Führungselement steht also radial von der Zylinderstange ab. In einer Ausgestaltung ist das Führungselement ein separates Bauteil oder eine separate Baugruppe. Alternativ oder ergänzend kann das Führungselement einstückig mit der Zylinderstange verbunden sein, beispielsweise in Form eines radialen Vorsprungs, in Form einer Vielzahl in Umfangrichtung verteilter Flügel oder in Form eines umlaufenden Absatzes oder Wulst.

Eine Führung zum axialen, linearen Führen wird auch als Geradführung bezeichnet und/oder erlaubt ein Führen nur entlang einer geometrischen Geraden, die vorliegend parallel zur Zylinderachse des Zylinders orientiert ist. Die Führung zum axialen, linearen Führen ist so eingerichtet, dass das durch die Führung axial, linear geführte Führungselement nur einen Freiheitsgrad der Bewegung hat, nämlich eine axiale Bewegung in die Ausstoßrichtung oder Ansaugrichtung. Andere Freiheitsgrade wie beispielsweise für ein Kippen oder eine radiale Translationsbewegung werden durch eine Führung zum axialen, linearen Führen eliminiert. Die Führung zum axialen, linearen Führen des Führungselements steht in direktem Kontakt mit dem Führungselement. Anders ausgedrückt begrenzt die Führung zum axialen, linearen Führen die Freiheitsgrade der Bewegung der Zylinderstange indirekt über das Führungselement. In einer Ausgestaltung ist die Führung eine Linearführung. Insbesondere ist die Linearführung nur durch Schmierstoff oder einen Wälzkörper von dem Führungselement getrennt.

Insbesondere ist die Führung fest im Gehäuse der Kolbenpumpe fixiert und/oder integriert. Vorzugsweise handelt es sich bei der Führung um ein Gleitlager. Ein besonders einfacherer und kompakter Aufbau kann so umgesetzt werden. In einer bevorzugten Ausgestaltung ist die Führung eine Ausnehmung, vorzugsweise eine sich axial länglich erstreckende Ausnehmung. Vorzugsweise weist die Führung ein in axialer Richtung konstantes Querschnittsprofil auf. Besonders bevorzugt ist die Führung eine zylindrische Ausnehmung. Alternativ oder ergänzend kann die Führung eine Wälzlagerführung, Schlittenführung oder Schienenführung sein oder aufweisen.

Das Einlassventil öffnet, wenn sich der Kolben in die Ansaugrichtung bewegt, und schließt, wenn sich der Kolben in die Ausstoßrichtung bewegt. Das Auslassventil funktioniert genau umgekehrt, d.h., das Auslassventil öffnet, wenn sich der Kolben in die Ausstoßrichtung bewegt, und schließt, wenn sich der Kolben in die Ansaugrichtung bewegt. Der Flüssiggaskraftstoff kann dadurch im Betrieb der Kolbenpumpe stets nur in eine Richtung fließen. Insbesondere umfassen das Einlassventil und/oder das Auslassventil jeweils eine Druckfeder, die zwischen einer Federaufnahme und einem Dichtkegel angeordnet ist, wobei der Dichtkegel eine Durchlassöffnung dicht zu sperren vermag, wenn der Gegendruck aus der Durchlassöffnung geringer ist als die Kraft der Druckfeder.

Die Ansaugrichtung ist die axiale Richtung, in welcher der zu pumpende Flüssiggaskraftstoff komprimiert wird.

Axial bedeutet parallel zur Zylinderachse des Zylinders. Die Zylinderachse ist die Mittelachse des Zylinders. Die Angabe radial ist auf die Zylinderachse bezogen.

In einer Ausführungsform ist die Kolbenpumpe so eingerichtet, dass ein Medium, das mit dem Führungselement direkt in Kontakt steht, axial durch das Führungselement hindurch oder radial an dem Führungselement vorbei geleitet wird, wenn sich das Führungselement axial bewegt. Auf diese Weise kann ein Verlust an Pumpleistung durch das in der Führung axial und linear geführte Führungselement vermieden oder zumindest reduziert werden. Das Medium, das im Betrieb der Kolbenpumpe mit dem Führungselement direkt in Kontakt steht, ist ein Fluid oder ein Gemisch aus mehreren Fluiden. Das Medium umfasst vorzugsweise ein Schmiermittel wie z.B. Schmieröl. Die Angabe "radial an dem Führungselement vorbei" kann bei einem scheibenförmigen Führungselement durch ein Leiten oder Strömen des Mediums entlang der radialen Mantelfläche des Führungselements in axialer Richtung an dem Führungselement vorbei realisiert sein. Alternativ oder ergänzend kann in einer Ausgestaltung eine Versorgungsleitung zum Leiten des Mediums radial beabstandet an dem Führungselement vorbei vorgesehen sein. Bevorzugt verläuft die Versorgungsleitung axial innerhalb des Führungsblocks radial von der Führung. Vorzugsweise verbindet die Versorgungsleitung einen oberen Bereich der Führung mit einem Schmiermittelbad im Kurbelgehäuseinnenraum. Insbesondere dichtet das Führungselement planmäßig nicht gegenüber der Führung ab und ist daher kein Kolben. Insbesondere weist das Führungselement keine Dichtung, also keinen Dichtring oder dergleichen zusätzlichen Dichtungskomponenten, gegenüber der Führung auf. Dennoch kann das Führungselement derart flächig die Führung ausfüllen, dass durch eine axiale Bewegung der Druck im Medium erhöht werden kann, weil weniger Medium zwischen dem Führungselement und der Führung und/oder radial an dem Führungselement vorbei durch die Versorgungsleitung durchgelassen wird, als für einen Druckausgleich nötig wäre. In einer Ausgestaltung ist das Führungselement nicht für Flüssiggaskraftstoff gegenüber der Führung abgedichtet. Dies ermöglicht eine selbstständige Schmierung des Führungselements.

In einer Ausgestaltung hat das Führungselement eine mindestens 25 %, bevorzugt 50 %, größere Querschnittsfläche verglichen mit der Zylinderstange. Eine zuverlässige, axiale, lineare Führung kann so sichergestellt werden. In einer Ausgestaltung ist das Führungselement scheibenförmig. Eine selbstständige Schmierung des Führungselements kann so mit besonders geringem Aufwand ermöglicht werden. In einer Ausgestaltung ist die Querausdehnung, insbesondere ein Durchmesser, des Führungselements zweimal, bevorzugt ungefähr dreimal und/oder höchsten fünfmal so groß wie Querausdehnung der Zylinderstange. Eine besonders effektive Versorgung der Schnittstelle zwischen dem Führungselement und der Führung mit Schmiermittel kann so ermöglicht werden.

In einer Ausgestaltung weist das Führungselement eine axiale Länge auf, die geringer ist als die Hälfte des axialen Hubweges des Kolbens im Zylinder und/oder größer ist als die axiale Länge des Kolbens. Eine besonders zuverlässige axiale, lineare Führung des Kolbens durch das Führungselement kann so sichergestellt werden. In einer Ausgestaltung ist das Führungselement an einem Ende der Zylinderstange und der Kolben an dem gegenüberliegenden Ende der Zylinderstange fest angebracht. Vorzugsweise ist die Zylinderstange einstückig und/oder vollständig gerade ausgeführt. In einer Ausgestaltung ist das Führungselement direkt zwischen der Pleuelstange und der Zylinderstange angeordnet und/oder verbindet die Pleuelstange mit der Zylinderstange gelenkig, bevorzugt mithilfe eines Gelenks des Führungselements. Insbesondere ist der geringste axiale Abstand zwischen dem Kolben und dem Führungselement mindestens oder ungefähr doppelt so groß wie die axiale Länge des Führungselements. Dies ermöglicht auf konstruktiv besonders einfache Weise das Integrieren einer Dichtungseinrichtung.

In einer Ausführungsform ist eine Dichtungseinrichtung axial zwischen dem Führungselement und dem Kolben angeordnet, um den Zylinder gegenüber der Zylinderstange abzudichten. Im planmäßigen Betrieb ist bereits der Kolben für den Flüssiggaskraftstoff gegenüber dem Zylinder abgedichtet, dass kein Flüssiggaskraftstoff oder keine nennenswerte Menge von Flüssiggaskraftstoff an dem Kolben vorbei in den Bereich des Zylinders zwischen dem Kolben und der Dichtungseinrichtung gelangt. Um ein unplanmäßiges Austreten von Flüssiggaskraftstoff zu verhindern und einen stets sicheren Betrieb der Pumpe zu gewährleisten, sorgt die Dichtungseinrichtung beispielsweise im Fall eines beschädigten oder abgenutzten Kolbens dafür, dass der Flüssiggaskraftstoff den Zylinder in Ansaugrichtung nicht verlässt. Insbesondere ist die Dichtungseinrichtung fest im Gehäuse der Kolbenpumpe fixiert und/oder integriert. Vorzugsweise hat die Dichtungseinrichtung eine axiale Ausdehnung, die länger als die axiale Länge des Kolbens ist. Eine stärkere Dichtungswirkung der Dichtungseinrichtung verglichen mit dem Kolben kann so auf konstruktive besonders einfache Weise erreicht werden. In einer Ausgestaltung ist die axiale Ausdehnung der Dichtungseinrichtung ungefähr so groß wie die axiale Länge des Führungselements oder geringer als die axiale Länge des Führungselements. Eine besonders steife Verbindung des Führungselements mit dem Kolben und damit ein besonders effektiver Schutz des Kolbens vor Querkräften kann so realisiert werden.

In einer Ausführungsform umfasst die Dichtungseinrichtung eine selbst nachstellende Dichtungseinheit, insbesondere einen Dachmanschettensatz. Versuche haben gezeigt, dass ein Dachmanschettensatz in Verbindung mit der linearen, axialen Führung der Zylinderstange durch das radiale Führungselement und die Führung eine außerordentlich große Abdichtungswirkung für Flüssiggaskraftstoff wie LPG erzielen kann. Ein besonders zuverlässiger Brandschutz durch Vermeidung eines unplanmäßigen Austretens von Flüssiggaskraftstoff aus der Kolbenpumpe kann so ermöglicht werden. Ein Dachmanschettensatz, auch englisch als v-packaging set oder chevron packing seal bezeichnet, umfasst bevorzugt mehrere v-förmige Dachmanschetten, die zwischen einem Druckring und einem Stützring mithilfe der Kraft einer Feder vorgespannt werden. Infolge der auf diese Weise radial nach innen erzeugten Ausdehnung der Manschetten wird die Zylinderstange auf während einer axialen Bewegung abgedichtet.

In einer Ausführungsform sieht ein Gehäuse der Kolbenpumpe einen separaten Trennungsblock zwischen einem Zylinderblock mit dem Zylinder und einem Führungsblock mit der Führung vor, die miteinander in axialer Richtung bewegungsfest verbunden sind. Durch das Einfügen eines separaten Trennungsblockes zwischen dem Zylinderblock und dem Führungsblock wird ermöglicht, die selbst nachstellende Dichtungseinheit, insbesondere einen Dachmanschettensatz, besonders fest vorgespannt zu montieren. Dies wäre bei einer einstückigen Fertigung des Trennungsblocks und Zylinderblocks als ein gemeinsames Bauteil nicht möglich. Der Zusatzaufwand durch das getrennte Fertigen und die zusätzliche, abzudichtende Schnittstelle sind Gründe, aus denen der Fachmann den Trennungsblock und den Zylinderblock normalerweise einstückig vorsehen würde, zumal der dieses gemeinsame Bauteil problemlos spanend gefertigt werden kann. Durch das Vorsehen des separaten Trennungsblocks wird bei der vorliegenden Kolbenpumpe eine besonders große Steigerung der Betriebssicherheit insbesondere beim Pumpen von Flüssiggaskraftstoff erreicht. Mit Block ist ein massives Gehäusebauteil gemeint, vorzugsweise mit einer Wandstärke von mindestens 5 mm, bevorzugt mindestens 10 mm. Hierdurch wird verhindert, dass ein Teil der oben erwähnten, großen Vorspannung der selbst nachstellenden Dichtungseinheit, insbesondere Dachmanschettensatz, durch eine radiale Verformung der Wandung reduziert wird.

In einer Ausgestaltung umfasst das Gehäuse der Kolbenpumpe einen separaten Zylinderkopf mit dem integrierten Einlassventil und integrierten Auslassventil, den Zylinderblock, den Trennungsblock und den Führungsblock. Insbesondere sind die genannten Gehäuseteile als getrennte Gehäuseteile vorzugsweise in genau der genannten Reihenfolge in axialer Richtung miteinander bewegungsfest verbunden und abgedichtet. Insbesondere wird ein Dichtungsring zur Abdichtung zweier axial aneinander angrenzender Gehäuseteile eingesetzt. Der Führungsblock kann einstückig mit einem Kurbelgehäuse-Oberteil verbunden sein, der gemeinsam mit einem separaten Kurbelgehäuse-Unterteil und/oder einem separaten Kurbelgehäuse-Flanschteil die Kurbelwelle und die Pleuelstangen aufnimmt.

In einer Ausführungsform dichtet die Dichtungseinrichtung stärker gegenüber der Zylinderstange ab als eine Kolbendichtung den Kolben gegenüber dem Zylinder. Falls eine geringe Menge von Flüssiggaskraftstoff die Kolbendichtung axial überwindet, wird dieser Flüssiggaskraftstoff dann von der Dichtungseinrichtung axial blockiert, so dass die erwähnte Menge Flüssiggaskraftstoff wieder zurück axial an der Kolbendichtung vorbei in den zylindrischen Hohlraum gelangen kann. Ein besonders zuverlässiger Betrieb der Kolbenpumpe beim Pumpen von Flüssiggas in der flüssigen und gasförmigen Phase kann so ermöglicht werden. Stärker abdichten meint, dass die Dichtungseinrichtung verglichen mit der Kolbendichtung bis zu einem höheren Druck des Flüssiggaskraftstoffes wie LPG ordnungsgemäß abzudichten vermag, wobei dieser höhere Druck oberhalb eines maximalen Betriebsdruckes der Kolbenpumpe liegt, der im ordnungsgemäßen Betrieb nicht erreicht werden darf.

In einer Ausgestaltung weist das Führungselement einen axialen Durchgang auf. Hierdurch kann das Gewicht des Führungselements reduziert und gleichzeitig ein Durchfluss des Mediums axial durch das Führungselement hindurch ermöglicht werden. In einer Ausgestaltung weist der Führungsblock und/oder das Kurbelgehäuse eine axiale Versorgungsleitung für Schmiermittel auf, die ein Schmiermittelbad mit einem oberen Bereich der Führung verbindet. Schmiermittel kann auf diese Weise nach oberhalb des Führungselements gesaugt werden, wenn sich das Führungselement nach unten, also in Ansaugrichtung bewegt.

In einer Ausführungsform weist das Führungselement ein Ventil zum Steuern eines axialen Durchflusses des Mediums auf. Alternativ oder ergänzend weist und/oder die Versorgungsleitung ein Ventil zum Steuern eines Durchflusses des Mediums auf. Die Schmierung der Schnittstelle zwischen dem Führungselement und der Führung kann so gezielt beispielsweise in Abhängigkeit des durch das Ventil zugelassenen Durchflusses eingestellt werden.

In einer Ausführungsform erlaubt die Kolbenpumpe ein axiales Durchlassen des Mediums durch das Führungselement hindurch nur in eine axiale Richtung, insbesondere mittels eines Ventils in einem axialen Durchgang des Führungselements. Alternativ oder ergänzend erlaubt die Kolbenpumpe ein Durchlassen des Mediums durch die Versorgungsleitung hindurch nur in eine Richtung, insbesondere mittels eines Ventils in der Versorgungsleitung. Auf diese Weise kann besonders effizient Schmiermittel in Gleitlager, Spalte oder Öffnungen zwischen dem Führungselement und der Führung gesaugt werden.

In einer Ausführungsform ist die Führung an einem Ende oder in einer ersten Richtung geschlossen und/oder an einem gegenüberliegenden Ende oder in der entgegengesetzten Richtung offen. Erfindungsgemäß ist die Führung in Ausstoßrichtung geschlossen und in Ansaugrichtung offen. Eine geschlossene Führung ermöglicht das Erzeugen einer Sogwirkung, wenn das Führungselement von dem geschlossenen Ende der Führung weg bewegt wird. Die Sogwirkung kann durch das Vorsehen eines offenen Endes am gegenüberliegenden Ende der Führung verstärkt werden.

In einer Ausgestaltung schließt sich ein Ventil des Führungselements, wenn sich das Führungselement in Ansaugrichtung bewegt, und öffnet sich, wenn sich das Führungselement in Ausstoßrichtung bewegt. Dadurch kann ein Komprimieren des Schmiermittels oberhalb des Führungselements vermieden werden. Insbesondere ist das Ventil in dem axialen Durchgang des Führungselements angeordnet. In einer alternativen oder ergänzenden Ausführungsform öffnet sich ein Ventil der Versorgungsleitung, wenn sich das Führungselement in Ansaugrichtung bewegt, und schließt sich, wenn sich das Führungselement in Ausstoßrichtung bewegt. Schmiermittel kann so besonders effizient in den oberen Bereich der Führung befördert werden. Vorzugsweise ist das Ventil des Führungselements und/oder der Versorgungsleitung ein Druckventil, besonders bevorzugt ein Rückschlagventil. Insbesondere öffnet das Ventil des Führungselements nur dann, wenn der Druck oberhalb des Führungselements, also in Ausstoßrichtung, größer ist als der Druck unterhalb des Führungselements, bevorzugt zuzüglich einer Schwelldruckdifferenz. Vorzugsweise ist die Schwelldruckdifferenz so niedrig eingestellt, dass es zu keiner nennenswerten Gegenkraft für die Pumpe durch die Druckerhöhung bei einer Bewegung des Führungselements in die Ausstoßrichtung kommt. Insbesondere öffnet das Ventil der Versorgungsleitung nur dann, wenn ein Saugdruck von einem Schmiermittelbad in Richtung eines oberen Bereichs der Führung vorliegt, bevorzugt zuzüglich einer Schwelldruckdifferenz.

In einer Ausgestaltung füllt das Führungselement im Querschnitt betrachtet mehr als 90% der offenen Querschnittsfläche der Führung aus und/oder weist einen Spaltbreite von weniger als 1 mm oder weniger als 0,1 mm zur Führung auf. Wenn sich das Führungselement in Ausstoßrichtung bewegt, kann auf diese Weise besonders zuverlässig der Druck im Medium zum Öffnen des Ventils erhöht werden.

In einer Ausführungsform ist die Führung in Ausstoßrichtung durch die Dichtungseinrichtung abgedichtet, also für das Medium, insbesondere Schmiermittel, abgedichtet. Der Dichtungseinrichtung kommt auf diese Weise eine Doppelfunktion zu, nämlich neben der primären Aufgabe einer Notfallsperre für Flüssiggaskraftstoff, der in Ansaugrichtung an dem Kolben vorbei gelangt ist, zusätzlich das Abdichten der Führung für das Medium gegenüber der Zylinderstange zum Erhalt eines geschlossenen Endes.

In einer Ausführungsform mündet die Führung in Ansaugrichtung in einem Kurbelgehäuseinnenraum oder geht in Ansaugrichtung in einen Kurbelgehäuseinnenraum über. Die Führung bildet also einen gemeinsamen Raum mit dem Kurbelgehäuseinnenraum. Hierdurch kann mit besonders geringem Fertigungsaufwand eine Führung erzeugt werden, die in Ansaugrichtung offen ist.

Gleichzeitig kann hierdurch bewirkt werden, dass ein zu pumpender Flüssiggaskraftstoff, der unplanmäßig sowohl den Kolben als auch die Dichtungseinrichtung in Ansaugrichtung überwunden hat, gezielt in den Kurbelgehäuseinnenraum geleitet wird. Dies wiederum ermöglicht ein kontrolliertes Abdichten dieses Kurbelgehäuseinnenraums und damit eine erhöhte Betriebssicherheit.

In einer Ausführungsform ist eine Anschlussöffnung zum Kurbelgehäuseinnenraum gegenüber einer darin aufgenommenen Antriebswelleneinheit zum Übertragen einer Antriebskraft von dem Antrieb auf die Kurbelwelle mithilfe eines X-Rings abgedichtet. Versuche haben gezeigt, dass bei einem Simulierten Versagen der Abdichtungen des Kolbens und der Dichtungseinrichtung eine große Dichtigkeitsschwachstelle überraschenderweise an der Anschlussöffnung zum Kurbelgehäuseinnenraum an der Schnittstelle zur Antriebswelleneinheit vorliegt. Gegenüber anders ausgeführten Dichtringen bewirkt ein X-Ring, insbesondere ein Simmerring mit X-förmigen Profil, in konkret dieser Problemstellung eine herausragende Sperre für Flüssiggaskraftstoff im Betrieb der Kolbenpumpe und bei Versagen der Kolbendichtung und der Dichtungseinrichtung. Eine Kolbenpumpe für Flüssiggaskraftstoff mit einem effektiven mehrstufigen Brandschutzsystem kann auf diese Weise bereitgestellt werden.

In einer Ausgestaltung ist ein mehrstufiges System mit mehreren in Reihe geschalteten Dichtigkeitssperren für Flüssiggaskraftstoff in flüssiger und gasförmiger Phase vorgesehen. Dies ermöglicht den Einsatz eines Elektromotors zum Antreiben der Pumpe bei weiterhin besonders hoher Betriebssicherheit beim Pumpen von Flüssiggaskraftstoff.

In einer Ausführungsform ist das Führungselement scheibenförmig, das Führungselement hat den gleichen Durchmesser wie der Kolben und/oder das Führungselement hat eine geringere axiale Länge als der Kolben. Ein zuverlässiges Schützen des Kolbens vor Querkräften kann auf diese Weise durch das Führungselement ermöglicht werden. Scheibenartig meint, dass das Führungselement eine äußere Mantelfläche mit einer runden Umfangsform aufweist. Insbesondere ist die axiale Länge des Führungselements ungefähr so groß wie die Querausdehnung des Führungselements, wobei "ungefähr" eine Abweichung von bis zu 15% umfasst.

In einer Ausgestaltung ist das Führungselement unmittelbar und gelenkig mit Pleuelstange gekoppelt. Die Kurbelbewegung der Pleuelstange kann dadurch in eine Translationsbewegung des Führungselements in der Führung umgewandelt werden, die über die Zylinderstange an den Kolben übertragen wird. Dem Führungselement kommt dadurch eine Doppelfunktion zu, nämlich zur axialen, linearen Führung des Kolbens und der Antriebsbewegungsübertragung auf die Zylinderstange. Insbesondere weist das Führungselement ein Gelenk auf. Ein Gelenk ist ein Drehlager. Vorzugsweise umfasst das Gelenk einen Bolzen, der in einer Querbohrung drehbar aufgenommen ist, sowie eine axiale Zugangsöffnung am Führungselement zum Ankoppeln der Pleuelstange an den Bolzen.

In einer Ausführungsform umfasst der Antrieb einen Elektromotor. Während ein Pneumatikantrieb oder Hydraulikantrieb stets auf eine Druckfluidquelle angewiesen sind, kann durch den Einsatz eines Elektromotors eine universelle und unabhängig von einer Druckfluidquelle einsetzbare Kolbenpumpe bereitgestellt werden. Üblicherweise werden Pumpen für Flüssiggaskraftstoff aufgrund von Explosionsgefahr gerade nicht mit einem Elektromotor angetrieben. Die erfindungsgemäße Pumpe ermöglicht jedoch durch die erhöhte Dichtheit, insbesondere in Verbindung mit einem mehrstufigen System mit mehreren in Reihe geschalteten Dichtigkeitssperren, den betriebssicheren Einsatz eines Elektromotors mit einem vergleichsweise geringem Mehraufwand zur explosionssicheren Ausgestaltung des Antriebs. Insbesondere trägt hierzu ebenfalls die Ausführungsform bei, die eine Anschlussöffnung zum Kurbelgehäuseinnenraum gegenüber einer darin aufgenommenen Antriebswelleneinheit zum Übertragen einer Antriebskraft von dem Antrieb auf die Kurbelwelle mithilfe eines X-Rings abdichtet.

In einer Ausgestaltung ist eine Stelleinheit vorgesehen, die ein Umstellen von einem Pumpbetrieb zu einem Saugbetrieb sowie ein Umstellen von einem Saugbetrieb zu einem Pumpbetrieb erlaubt. Der Pumpbetrieb und der Saugbetrieb sind also Betriebsmodus mit entgegengesetzter Pumprichtung. Ein Umbauen oder Lösen von Anschlüssen an dem Einlass und Auslass ist hierfür nicht erforderlich. Insbesondere ist die Stelleinheit außerhalb des Gehäuses der Kolbenpumpe angeordnet und/oder über eine Einlassleitung an den Einlass und/oder über eine Auslassleitung an den Auslass angeschlossen. Vorzugsweise sind eine Fluidquelle und/oder ein Verbraucher an die Stelleinheit angeschlossen. Insbesondere umfasst die Stelleinheit eine Ventilsteuerung, die so eingerichtet ist, dass in dem Pumpbetrieb ein Fluid von der Kolbenpumpe aus der Fluidquelle angesaugt und/oder an den Verbraucher ausgestoßen wird und im Saugbetrieb ein Fluid von dem Verbrauer angesaugt und an die Fluidquelle ausgestoßen wird. Die Stelleinheit ermöglicht es dem Benutzer, die Pumprichtung, also den Betriebsmodus, mit sehr geringem Aufwand umzustellen. In einer Ausführungsform ist die Kolbenpumpe, vorzugsweise inklusive der Stelleinheit, eine Komponente einer Abfüllanlage oder Abfüllstation insbesondere für Fahrzeuge oder Gasflaschen.

In einer Ausführungsform ist das Führungselement steif über die Zylinderstange mit dem Kolben verbunden, so dass sich das Führungselement, die Zylinderstange und der Kolben in axialer Richtung stets synchron bewegen. Dadurch wird ein besonders zuverlässiger Schutz des Kolbens vor Querkräften erzielt. Ferner haben dadurch das Führungselement und der Kolben einen gleichen Hubweg. Der Hubweg ist die maximale axiale Strecke, die im Betrieb durch den Kolben und damit durch das Führungselement gegenüber dem Gehäuse zurückgelegt werden kann. Eine besonders zuverlässige Schmierung des Führungselementes kann auf diese Weise erzielt werden. Eine steife Verbindung erlaubt eine nur vernachlässigbare Relativbewegung zueinander, die z.B. allgemein aus einer Durchbiegung der Zylinderstange oder einem Spiel einer bewegungsfesten Verbindung resultieren kann. Vorzugsweise ist die Zylinderstange mit dem Führungselement und/oder dem Kolben durch eine Schraubverbindung verbunden. Dies erlaubt eine sehr steife Fixierung.

In einer Ausführungsform sind zwei separate Pumpeinheiten jeweils mit einem Zylinder, einem Kolben, einer Zylinderstange und einem Führungselement vorgesehen. Ein besonders einfach aufgebauter Überstromschutz kann so ermöglicht werden. Jede Pumpeinheiten hat also einen eigenen Zylinder, einen eigenen Kolben, eine eigene Zylinderstange, bevorzugt ebenfalls ein eigenes Einlassventil, ein eigenes Auslassventil, eigene Führung und/oder eine eigene Pleuelstange.

In einer Ausführungsform sind nur ein Auslass und/oder nur ein Einlass über einen Zylinderkopf mit zwei Zylindern verbunden. Ein Auslass in diesem Sinne ist kein Ausgang einer Überstromschutzeinrichtung, die in einer bevorzugten Ausgestaltung einen eigenen Ausgang insbesondere zum Vorratstank aufweist. Zwei Pumpeinheiten mit jeweils einem Zylinder haben also einen gemeinsamen Einlass und/oder einen gemeinsamen Auslass. Eine besonders leistungsstarke Kolbenpumpe und ein besonders einfach aufgebauter Überstromschutz können so mit besonders geringem Aufwand hergestellt werden. In einer Ausgestaltung ist der Einlass über einen Einlasskanal mit den zwei Zylindern verbunden, bevorzugt über jeweils ein Einlassventil. In einer Ausgestaltung ist der Auslass über einen Auslasskanal mit den zwei Zylindern verbunden, bevorzugt über jeweils ein Auslassventil. In einer Ausgestaltung sind der Einlasskanal und/oder der Auslasskanal in dem Zylinderkopf integriert, d.h. der Einlasskanal und/oder der Auslasskanal verlaufen innerhalb des Zylinderkopfes von dem Einlass oder dem Auslass zu den zwei Zylindern. Vorzugsweise bildet der Einlasskanal und zwei Einlassventile eine erste gemeinsame Kreuzung, so dass im Betrieb angesaugter Flüssiggaskraftstoff aus dem Einlass über den nur einen Einlasskanal durch den Zylinderkopf zur ersten Kreuzung geleitet werden kann, wo der Flüssiggaskraftstoff über die zwei Einlassventile in die zwei Zylinder gelangen kann. Vorzugsweise bildet der Auslasskanal und zwei Auslassventile eine zweite gemeinsame Kreuzung, so dass im Betrieb über die zwei Auslassventile aus den Zylindern ausgestoßener Flüssiggaskraftstoff an der zweiten Kreuzung in den nur einen Auslasskanal durch den Zylinderkopf zum Auslass geleitet werden kann.

Überstromschmutz bedeutet, dass im Falle eines Staus von Flüssiggaskraftstoff am Auslass während des laufenden Betriebs der Kolbenpumpe der komprimierte Flüssiggaskraftstoff abgeführt und der Druck in der Kolbenpumpe reduziert wird, damit ein maximaler Betriebsdruck gar nicht erst erreicht oder überschritten wird. Wenn beispielsweise die Temperatur in einem zu betankenden oder aufzufüllenden Gastank übermäßig groß ist, kann verbraucherseitig ein Druck am Auslass im Bereich des maximalen Betriebsdrucks der Kolbenpumpe entstehen, so dass der Vorratstank kein Flüssiggaskraftstoff aufnehmen kann. Ohne einen Überstromschmutz oder äquivalente Druckverringerungsmaßnahmen drohen eine übermäßige Druckerhöhung im Pumpsystem und ein unplanmäßiges Austreten des Flüssiggaskraftstoffes beispielsweise an einer durch den Überdruck erzeugten Leckagestelle. Eine Ursache für einen Stau von Flüssiggaskraftstoff am Auslass kann darin bestehen, dass ein an den Auslass angeschlossener Verbraucher keinen Flüssiggaskraftstoff mehr abnimmt oder aufnehmen kann. Ein Verbrauer ist z.B. ein zu betankendes Fahrzeug oder eine zu füllende Gasflasche. Der Einlass kann insbesondere über eine externe Leitung oder einen Schlauch mit einer Fluidquelle, z.B. ein Vorratstank, verbunden werden. In einer Ausgestaltung ist ein Ausgang einer Überstromschmutzeinrichtung mit der Fluidquelle, insbesondere dem Vorratstank, verbunden, so dass bei einer übermäßigen Druckerhöhung im Pumpsystem Flüssiggaskraftstoff zurück zur Fluidquelle gelangen kann, so dass der Druck im Pumpsystem reduziert wird.

In einer Ausgestaltung sind die zwei Zylinder parallel und/oder über denselben axialen Abschnitt bevorzugt unmittelbar nebeneinander im Zylinderblock angeordnet. Ein Überstromschutz kann dadurch mit besonders geringem Herstellungsaufwand und sehr wenigen Zusatzteilen implementiert werden. In einer Ausgestaltung ist der Zylinderkopf in Ausstoßrichtung bewegungsfest und dicht am Zylinderblock angebracht. Ein Zylinderkopf ist ein insbesondere separates Teil des Gehäuses.

In einer Ausgestaltung zweigt ein Überströmleitungskanal insbesondere T-förmig von einem Auslasskanal ab, der einen Auslass bevorzugt direkt mit zwei Auslassventilen verbindet. Insbesondere sind diese beiden Auslassventilen mit unterschiedlichen Zylindern verbunden. Insbesondere sind der Auslasskanal und/oder der Überströmleitungskanal zwischen zwei Auslassventilen angeordnet.

In einer Ausgestaltung erfolgt kein Verbinden des Auslasses mit einem Einlass durch den Überströmleitungskanal und/oder der Überströmleitungskanal ist über ein Überstromschutzventil mit einem Ausgang aus dem Zylinderkopf verbunden. Eine Hitzeentwicklung bei übermäßigem Druck kann so reduziert werden.

In einer weiteren Ausgestaltung sind der Auslass und der Einlass durch einen Überströmleitungskanal vorzugsweise direkt miteinander verbunden. Insbesondere verläuft der Überströmleitungskanal innerhalb des Zylinderblocks. Ein kompakter Aufbau kann so realisiert werden.

In einer Ausführungsform öffnet ein Überstromschutzventileinen Überströmleitungskanal nur bei Erreichen eines Auslösedruckes, der geringer ist als der maximale Betriebsdruck der Kolbenpumpe. Wenn zwei Zylinder vorgesehen sind und durch das Ausstoßen des Flüssiggaskraftstoffes in einem der Zylinder der Druck am gemeinsamen Auslass den Auslösedruck erreicht, kann dadurch der komprimierte Flüssiggaskraftstoff vom Auslass über das Überstromschutzventil durch den Überströmleitungskanal abtransportiert werden. Dieser Abtransport erfolgt in einer bevorzugten Ausgestaltung über einen Ausgang, der Flüssiggaskraftstoff nach außerhalb der Kolbenpumpe leiten kann. Einer Temperaturerhöhung des Flüssiggaskraftstoffes innerhalb der Kolbenpumpe kann so vorgebäugt und Druck abgebaut werden.

In einer ergänzenden oder alternativen Ausgestaltung kann dieser Abtransport zum Einlasskanal erfolgen. Von dort kann der durch den Überströmleitungskanal geleitete Flüssiggaskraftstoff über das Einlassventil des anderen Zylinders in den anderen Zylinder strömen und auf diese Weise der Druck am Auslass reduziert werden. Falls sich durch das Zurückführen des komprimierten Flüssiggaskraftstoffes der Druck im Einlasskanal und damit am Einlass erhöht, wird dadurch von alleine der Zustrom von Flüssiggaskraftstoff von einer Fluidquelle, z.B. aus einem Vorratstank, gestoppt. Ein Erreichen oder Überschreiten des maximalen Betriebsdrucks kann so auf konstruktiv besonders einfache Weise verhindert werden.

In einer Ausführungsform sind ein Auslasskanal, der den Auslass direkt mit zwei Auslassventilen verbindet, und ein Einlasskanal, der den Einlass direkt mit zwei Einlassventilen verbindet, vorhanden. Eine sehr kompakte Bauweise und ein besonders geringer Herstellungsaufwand können so ermöglicht werden.

In einer Ausführungsform ist ein Überströmleitungskanal mit einem integrierten Überstromschutzventil vorgesehen und/oder direkt mit dem Auslasskanal verbunden. Ein Erreichen oder Überschreiten des maximalen Betriebsdrucks kann so auf konstruktiv besonders einfache Weise verhindert werden.

Wenn der Überströmleitungskanal mit einem Ausgang aus der Kolbenpumpe verbunden ist, kann Überdruck durch Rückführung z.B. in einen Vorratstank auf eine für die Kolbenpumpe besonders schonende Weise abgebaut werden. Wenn der Überströmleitungskanal mit dem Einlasskanal direkt verbunden ist, um Flüssiggaskraftstoff von dem Auslasskanal in den Einlasskanal abzuführen, kann eine zusätzliche Leitung zum Vorratstank, die normalerweise außerhalb des Pumpengehäuses verläuft, eingespart und die Sicherheit beim Pumpen von Flüssiggaskraftstoffen erhöht werden, da jede zusätzliche Leitung zur Fluidquelle allgemeine Sicherheitsrisiken bürgen.

In einer Ausführungsform weist das Überstromschutzventil einen Auslösedruck zum Öffnen des Überströmleitungskanals unterhalb eines maximalen Betriebsdruckes der Kolbenpumpe auf. Komprimierter Flüssiggaskraftstoff kann auf diese Weise besonders zuverlässig vom Auslasskanal oder dem Auslass abtransportiert und der Druck reduziert werden, sobald der Auslösedruck überschritten wird. In einer alternativen und nicht bevorzugten Ausgestaltung entspricht der Auslösedruck dem maximalen Betriebsdruck, was dazu führen kann, dass die Kolbenpumpe vorübergehend bei maximalem Betriebsdruck betrieben wird.

Der maximale Betriebsdruck ist ein im Labor ermittelter Druckwert, bei dem ein zuverlässiger und sicherer Betrieb der Kolbenpumpe gerade noch gewährleistet werden kann. Vorzugsweise beträgt der maximale Betriebsdruck bei der vorliegenden Kolbenpumpe mindestens 20 bar und/oder höchstens 30 bar, insbesondere 25 bar. Insbesondere wird der Auslösedruck zum Öffnen des Überstromschutzventils mindestens 1 bar oder 2 bar unterhalb des maximalen Betriebsdrucks eingestellt. Ein zuverlässiger und sicherer Betrieb der Kolbenpumpe wird so ermöglicht.

In einer Ausgestaltung ist die Kolbenpumpe mit zwei Pumpeinheiten so eingerichtet, dass die zwei Kolben genau gegenläufig zueinander axial laufen und/oder um 180° versetzt mit der Kurbelwelle verbunden sind. Hierdurch wird ermöglicht, dass im Betrieb die Summe der Volumina der zwei zylindrischen Hohlräume, die jeweils durch einen Zylinder und einen Kolben begrenzt werden, stets konstant bleibt. Anders ausgedrückt entspricht die Abnahme des Volumens des einen zylindrischen Hohlraums durch eine axiale Bewegung des entsprechenden Kolbens in Ausstoßrichtung genau der Zunahme des Volumens des anderen zylindrischen Hohlraums durch die gleich große axiale Bewegung des anderen Kolbens in Ansaugrichtung. Im Umkehrpunkt der Kurbelbewegung der Pleuelstange ruhen beide Kolben ohne eine axiale Bewegung, wobei der eine zylindrische Hohlraum dann das maximale Volumen bei maximalem Hub des Kolbens aufweist, während der andere zylindrische Hohlraum ein minimales Volumen von grundsätzlich Null mit minimalem Hub des anderen Kolbens von Null aufweist. Um 180° versetzt mit der Kurbelwelle verbunden bedeutet, dass die zwei Pleuelstangen an zwei Winkelpositionen, die um 180° um die Rotationsachse der Kurbelwelle versetzt sind, außermittig mit der Kurbelwelle drehbar beweglich verbunden sind. Dies bewirkt, dass sich die von der Kurbelwelle abgewandten Enden der beiden Pleuelstangen stets gegeneinander in axialer Richtung bewegen, was mit der axialen Bewegung der zwei Kolben korrespondiert.

Wenn der Überströmleitungskanal mit dem Einlasskanal direkt verbunden ist, kann durch zwei genau gegenläufig zueinander axial laufenden Kolben und/oder um 180° versetzt mit der Kurbelwelle verbundene Kolben erreicht werden, dass im Falle eines Erreichens des Auslösedruckes ein durch den einen Kolben in Ausstoßrichtung ausgedrücktes Volumen Flüssiggaskraftstoff über den Überströmkanal in den anderen Zylinder gelangt, in dem zur gleichen Zeit dasselbe Volumen des zylindrischen Hohlraums durch die axiale Kolbenbewegung in Ansaugrichtung erzeugt wird und dadurch der überströmte Flüssiggaskraftstoff dort aufgenommen werden kann. Der Betriebsdruck kann auf diese Weise zuverlässig unterhalb des maximalen Betriebsdruckes gehalten werden. Solange der Stau am Auslass fortbesteht und kein Verbrauer Flüssiggaskraftstoff am Auslass abnimmt oder abnehmen kann, zirkuliert der Flüssiggaskraftstoff somit von dem einen Zylinder zum anderen Zylinder und wieder zurück. Mit anderen Worten strömt der Flüssiggaskraftstoff stets über denselben Überstromkanal zwischen beiden Zylindern hin und her. Dadurch, dass der Systemdruck auf diese Weise ausgeglichen werden kann, wird der maximal Betriebsdruck nicht erreicht oder überschritten.

Eine bevorzugte Ausführungsform oder ein weiterer Aspekt der Erfindung betreffen eine Kolbenpumpe zum Pumpen eines Flüssiggaskraftstoffes, insbesondere LPG, wobei die Kolbenpumpe zwei Pumpeinheiten mit jeweils einen Zylinder und einen Kolben, der sich im Zylinder axial in eine Ansaugrichtung und eine Ausstoßrichtung bewegen kann, umfasst. Die zwei Zylinder sind in einem Zylinderblock integriert. An den Zylinderblock grenzt in Ausstoßrichtung ein Zylinderkopf an, die gemeinsam einen Teil eines Gehäuses der Kolbenpumpe bilden. In dem Zylinderkopf sind für beide Pumpeinheiten jeweils ein Einlassventil und ein Auslassventil integriert. Ein Auslasskanal verbindet innerhalb des Zylinderkopfes einen Auslass für den gepumpten Flüssiggaskraftstoff mit zwei Auslassventilen. Ein Einlasskanal verbindet innerhalb des Zylinderkopfes einen Einlass für den zu pumpende Flüssiggaskraftstoff mit zwei Einlassventilen. Ein Überströmleitungskanal mit einem integrierten Überstromschutzventil verbindet das Auslassventil mit einem Ausgang aus der Kolbenpumpe und/oder mit dem Einlassventil innerhalb des Zylinderkopfes. Insbesondere weist das Überstromschutzventil einen Auslösedruck zum Öffnen des Überströmleitungskanals unterhalb eines maximalen Betriebsdruckes der Kolbenpumpe auf. Die zuvor beschriebenen Merkmale mit Bezug zu dem Überströmleitungskanal und dem Überstromschutzventil können mit diesem Aspekt kombiniert werden.

Ein weiterer Aspekt der Erfindung betrifft eine Abfüllstation für ein Füllen von Gasflaschen mit einer Kolbenpumpe insbesondere gemäß einem der oben beschriebenen Aspekte oder einer der oben beschriebenen Ausführungsform. Ein besonders sicheres Befüllen von Gasflaschen mit Flüssiggas in der Gasphase und/oder Flüssigphase kann so ermöglicht werden. Insbesondere umfasst der Antrieb einen Elektromotor. Einer der dadurch bewirkten Vorteile besteht darin, dass dann die Abfüllstation auch bei extremen Temperaturschwankungen betrieben werden kann.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figuren 1a und 1b:: Isometrische Darstellung einer Kolbenpumpe mit ausgeblendetem Antrieb, wobei in den Fig. 1a und 1b unterschiedliche Ausgestaltungen des Zylinderkopfes gezeigt werden;
- Figuren 2a und 2b:: Querschnittsdarstellung der Kolbenpumpe von Fig. 1a bzw. 1b mit zwei Pumpeinheiten;
- Figuren 3a und 3b:: Querschnittsdarstellung der Kolbenpumpe von Fig. 1a bzw. 1b mit einer Detaildarstellung einer Dichtungseinrichtung;
- Figuren 4a und 4b:: Querschnitt des Zylinderkopfes der Kolbenpumpe der Figur 1a bzw. 1b mit einem Überströmkanal und integriertem Ü berstromschutzventil;
- Figur 5:: Schematische Darstellung einer Abfüllstation.

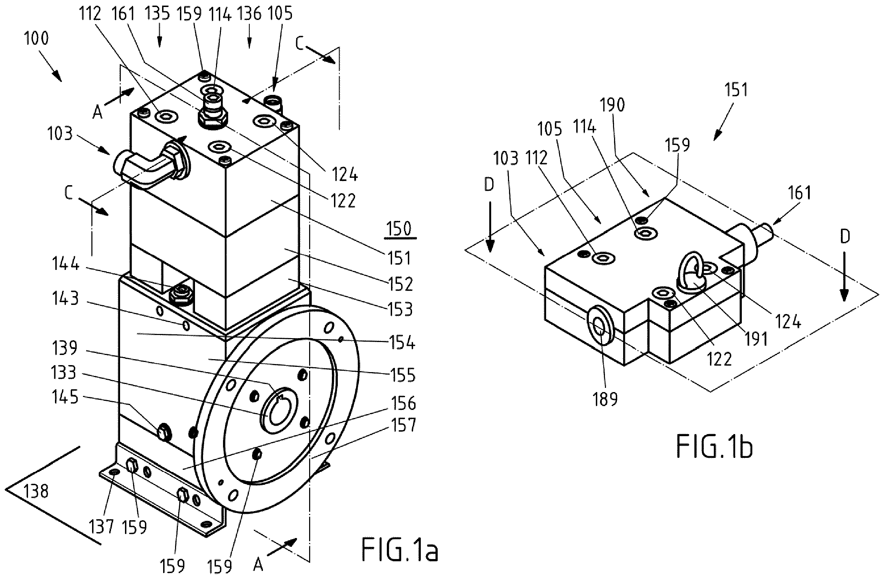

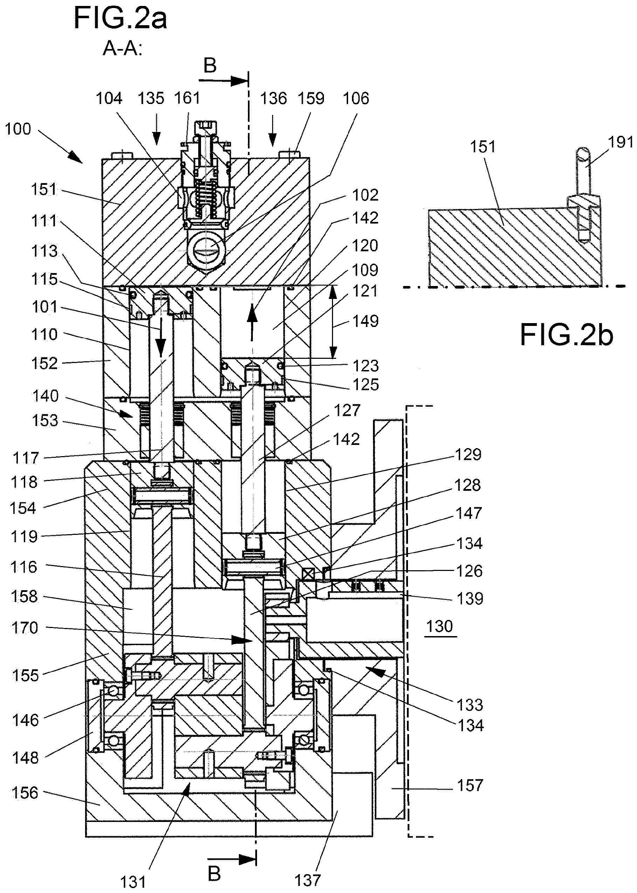

Die Figur 1a zeigt die Kolbenpumpe 100 von außen. Die Figur 1b zeigt dieselbe Kolbenpumpe der Fig. 1a mit einem unterschiedlichen Zylinderkopf 151. Bei der Fig. 1b wurde wie bei den Fig. 2b, 3b und 4b der Teil unterhalb des Zylinderkopfes 151 der Übersichtlichkeit halber ausgeblendet. Der ausgeblendete Teil ist identisch mit dem in den Figuren 2a, 3a bzw. 4a gezeigten Teil unterhalb des Zylinderkopfes 151.

Das Gehäuse 150 der Kolbenpumpe 100 setzt sich wenigstens aus vier separaten Gehäuseteilen zusammen, die in folgender Reihenfolge bewegungsfest mittels Gehäuseschrauben 159 verbunden sind. Das obere Ende wird durch den Zylinderkopf 151 gebildet, an den sich der Zylinderblock 152, der Trennungsblock 153 und der Führungsblock 154 anschließen.

An der Oberseite des Zylinderkopfes 151 sind in den Eckbereichen die Köpfe von Gehäuseschrauben 159 zu erkennen. Im mittleren Bereich der Oberseite des Zylinderkopfes 151 sind an der motorabgewandten Seite nebeneinander ein Einlassventil 112 und ein Auslassventil 114 einer motorabgewandten Pumpeinheit 135 und an der motorzugewandten Seite parallel dazu ein motorzugewandtes Einlassventil 122 und Auslassventil 124 einer motorzugewandten Pumpeinheit 136. Zwischen oder neben beiden Einlassventilen 112, 122 erstreckt sich an der Außenseite des Zylinderkopfes 151 ein Einlass 103 zum Anschließen beispielsweise eines nicht dargestellten Vorratstanks oder einer anderen Fluidquelle. Vorzugsweise ist der Einlass 103 motorabgewandt ausgerichtet. Optional umfasst er eine Winkelverschraubung (Fig. 1a). An der gleichen oder gegenüberliegenden Außenseite erstreckt sich neben oder zwischen den Auslassventilen 114, 124 ein Auslass 105, bevorzugt mit derselben Ausrichtung wie der Einlass 103. Optional kann der Auslass 105 eine Winkelverschraubung aufweise und/oder nach oben ausgerichtet sein. Durch unterschiedliche Gewindegrößen und/oder Ausrichtungen kann ein Verwechseln des Auslasses 105 und des Einlasses 103 vermieden werden. Durch ein Ausrichten in derselben Richtung kann hingegen ein Anschließen mit besonders geringem Aufwand und Raumbedarf ermöglicht werden. Die Einlass- und Auslassventile 112, 114, 122, 124 sind bevorzugt eingelassen und/oder mit der Oberfläche fluchtend angeordnet. An einer Außenseite des Zylinderkopfes 151 steht ein Überstromschutzventil 161 hervor, das sich bevorzugt senkrecht zur Außenseite erstreckt. Alle an der Oberseite des Zylinderkopfes 151 erkennbaren und oben beschriebenen Komponenten sind durch ein Einschrauben von oben in den Zylinderkopf 151 montierbar.

In der Ausgestaltung der Fig. 1b ist ein Transportanker 191 zum Anbringen eines Hebemittels zum Versetzen oder Transportieren der Kolbenpumpe zu erkennen. Ferner ist eine Dichtschraube 189 abgebildet, die bevorzugt senkrecht zum Einlass 103 orientiert ist. Insbesondere an einer gegenüberliegenden Außenseite ist das Überstromschutzventil 161 angeordnet. Das Überstromschutzventil 161 ist senkrecht zum Auslass 105 orientiert und/oder zwischen den Auslassventilen 114, 124 angeordnet. Bevorzugt ist die Außenseite, an der das Überstromschutzventil 161 hervor, senkrecht zur Oberseite orientiert. Neben den Auslassventilen 114, 124 ist ein Ausgang 190 vorgesehen, der insbesondere parallel zu dem Einlass 103 und/oder Auslass 105 orientiert ist. Insbesondere wird der Ausgang 190 im Betrieb z.B. über eine Leitung an den nicht dargestellten Vorratstank angeschlossen. Der Ausgang 190, der Einlass 103 und der Auslass 105 sind in der Fig. 1b auf der rückwärtigen Außenseite und daher in dieser Ansicht verdeckt. Insbesondere bildet der Zylinderkopf 151 der Fig. 1b eine T-Form mit dem unmittelbar darunter angeordneten Führungsblock 154.

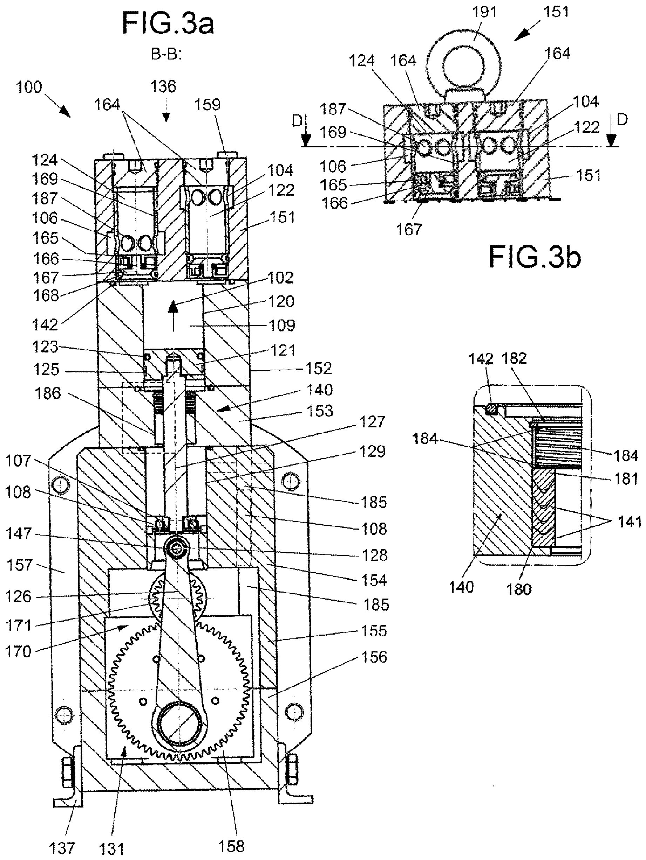

Der Führungsblock 154 bildet mit dem Kurbelgehäuse 155, 156, 157 einen gemeinsamen Kurbelgehäuseinnenraum 159. Insbesondere ist der Führungsblock 154 einstückig mit einem sich darunter anschließenden Kurbelgehäuse-Oberteil 155 ausgeführt, der nach unten mit einem Kurbelgehäuse-Unterteil 156 und seitlich mit einem Kurbelgehäuse-Flanschteil 157 zum Anbringen eines nicht dargestellten Elektromotors verschraubt ist, der mittels einer Welle-Nabe-Verbindung 139 eine Antriebswelleneinheit 133 rotieren kann. Mit dem Kurbelgehäuse-Unterteil 156 verschraubte Winkellaschen 137 dienen dem bewegungsfesten Fixieren der Kolbenpumpe 100 auf einem Untergrund 138. Für die Verschraubungen der Gehäuseteile werden Gehäuseschrauben 159 eingesetzt, bevorzugt Zylinderkopfschrauben, und/oder zur Abdichtung aneinander angrenzender Gehäuseteile dienen Gehäusedichtelemente 142 (siehe Fig. 2 und 3), bevorzugt O-Ringe insbesondere aus NBR 70. Insbesondere erstrecken sich bevorzugt genau vier axial orientierte, parallele Gehäuseschrauben 159 durch Seitenkantenbereiche von dem Zylinderkopf 151 über den Zylinderblock 152 und den Trennungsblock 153 bis in den Führungsblock 154 hinein, um die genannten Gehäuseteile zu verschrauben. Eine Entlüftungsschraube 144 sowie Dichtstopfen 143 sind am Führungsblock 154 angebracht. Der Kurbelgehäuseinnenraum 159 wird über die Entlüftungsschraube 144 mit einem Schmiermittel, insbesondere Öl, gefüllt und zwar ungefähr bis zum Schauglas 145 im Kurbelgehäuse-Oberteil 155. Vorzugsweise handelt es sich hierbei um eine Tauchschmierung, bei der sich ein Schmiermittelbad am Boden des Kurbelgehäuses sammelt. Über eine Versorgungsleitung 185, dessen Verlauf in Fig. 3 angedeutet ist, kann Schmieröl im Betrieb von dem Schmiermittelbad in einen oberen Bereich der Führung 119, 129 gelangen oder gesaugt werden.

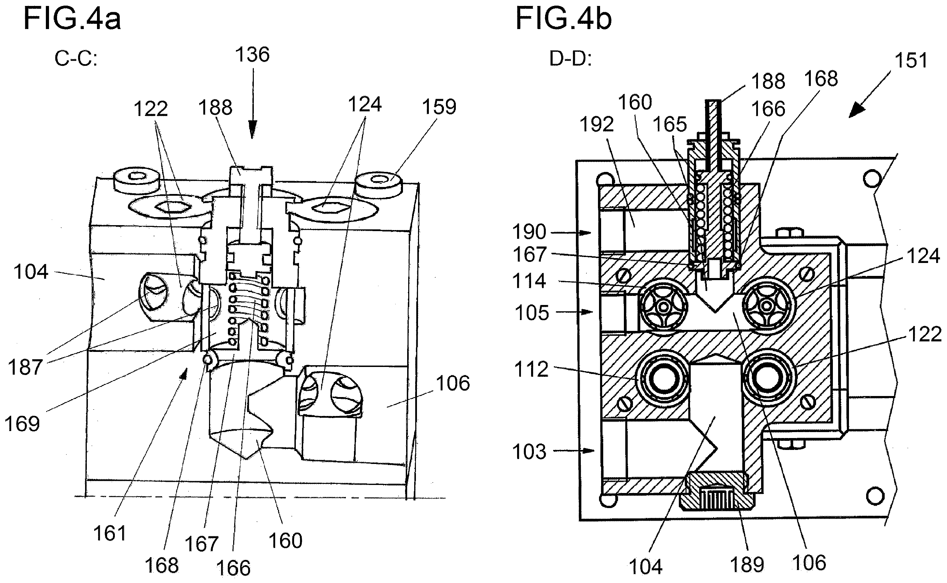

Die Figur 2a zeigt den inneren Aufbau der Kolbenpumpe 100 mit der motorabgewandten Pumpeinheit 135 und der motorzugewandten Pumpeinheit 136. In dieser Ausgestaltung ist mittig zwischen den Pumpeinheiten 135, 136 im Zylinderkopf 151 ein Auslasskanal 106 zum Auslass 105 zu erkennen, der über das Überstromschutzventil 161 mit einem Einlasskanal 104 zur Regulierung eines konstanten Betriebsdrucks verbunden ist, worauf bei der Beschreibung der Figur 4a noch genauer eingegangen wird. In dieser Schnittdarstellung zeigt in der bevorzugten Ausgestaltung der Figur 1b der Zylinderkopf 151 vorzugsweise nur den Transportanker 191. Bei beiden Ausgestaltungen der Fig. 2a und 2b sind zwischen den Gehäuseteilen 151, 152, 153 und 154 die Gehäusedichtelemente 142 zu erkennen. Der Kolben 110 der motorabgewandten Pumpeinheiten 135 befindet sich momentan am oberen Ende des axialen Hubweges innerhalb des Zylinders 110 und wird sich in Ansaugrichtung 101 bewegen. Der Kolben 121 der motorzugewandten Pumpeinheit 136 befindet sich momentan am unteren Ende des axialen Hubweges innerhalb des Zylinders 110 und wird sich daher in Ausstoßrichtung 102 bewegen. Der von dem Kolben 121 und dem Zylinder 110 begrenzte zylindrische Hohlraum 109 ist maximal groß und mit dem zu pumpenden Fluid, hier Flüssiggaskraftstoff, gefüllt. In einer Ausgestaltung wird der maximale Hubweg 149 für den Kolben 111, 121 durch zwei der folgenden Anschläge definiert: ein Anschlagen des Führungselements 118, 128 gegen die Unterseite des Trennungsblockes 153, ein Anschlagen des Kolbens 111, 121 gegen die Oberseite des Trennungsblockes 153 und/oder ein Anschlagen des Kolbens 111, 121 gegen die Unterseite des Zylinderkopfes 151. Durch das Vorsehen von zwei Pumpeinheiten 135, 136 in der gezeigten Weise kann die doppelte Förderleistung bei einer Umdrehung der Kurbelwelle 131 bei einer besonders kompakten Bauweise erzielt werden. Der Antrieb 130 überträgt bevorzugt über eine Welle-Nabe-Verbindung 139 ein Drehmoment auf die Kurbelwelle 131, die durch Drehlager 146, insbesondere Rillenkugellager, rotierbar gelagert ist.

An beiden Enden der Kurbelwelle 131 ist der Kurbelgehäuseinnenraum 158 mit Verschlussscheiben 148, auf denen sich O-Ringe befinden, zuverlässig abgedichtet. Oberhalb der motorseitigen Verschlussscheibe 148 ist eine Anschlussöffnung 132 angeordnet, die von dem Kurbelgehäuseinnenraum 158 zum Antrieb 130 führt. Durch die Anschlussöffnung 132 erstreckt sich die Antriebswelleneinheit 133, die über ein Getriebe 170 mit der Kurbelwelle 131 gekoppelt ist. Die Antriebswelleneinheit 133 und die Anschlussöffnung 132 sind mithilfe eines X-Rings 134 abgedichtet.

Durch die Rotation der Kurbelwelle 131 führen Pleuelstangen 116, 126, die in Umfangrichtung 180° versetzt, beweglich und außermittig an der Kurbelwelle 131 angebracht sind, eine Kurbelbewegung aus. Durch die Kurbelwelle 131 mit versetzter Mittelachse wird ein leistungsfähiger Hub der Kolben 111, 121 erzeugt. Die Pleuelstangen 116, 126 sind jeweils über ein Gelenk 147 von unten mit einem scheibenförmigen Führungselement 118, 128 verbunden, dass axial und linear in einer Führung 119, 129 geführt wird, die durch eine Innenwand des Führungsblocks 154 gebildet wird. Die Führungselemente 118, 128 sind jeweils über eine Zylinderstange 117, 127 steif mit dem jeweiligen Kolben 111, 121 verbunden, vorzugsweise durch eine Verschrauben der Zylinderstange 117, 127 an beiden Enden mit dem Rührungselement 118, 128 und dem Kolben 111, 121. Das Führungselement 118, 128 bewegt sich also synchron mit dem über die Zylinderstange 117, 127 steif gekoppelten Kolben 111, 121. Jeder Kolben 111, 121 ist mit einem Dichtring 113, 123 insbesondere aus PTFE und einem darunter angeordneten Dichtungsführungsband 115, 125 bevorzugt aus PTFE ausgestattet, die axial benachbart den Umfang des Kolbens 111, 121 umschließen, um zuverlässig flüssigen und gasförmigen Flüssiggaskraftstoff gegenüber dem Zylinder 110, 120, abzudichten. Die Zylinderstangen 117, 127 sind jeweils durch eine Dichtungseinrichtung 140 im Trennungsblock 153 abgedichtet, worauf in der Beschreibung der Figur 3 noch näher eingegangen wird.

Die Figuren 3a und 3b illustrieren den inneren Aufbau der Kolbenpumpe 100 anhand einer senkrecht zur Figur 2a bzw. 2b orientierten Schnittebene. Die folgende Beschreibung mit Bezug zur motorzugewandten Pumpeneinheit 136 gilt auch analog für die motorabgewandte Pumpeneinheit 135. Der Zylinder 120 der motorzugewandten Pumpeneinheit 136 führt in Ausstoßrichtung 102 direkt zu dem Einlassventil 122 und Auslassventil 124, die in Ausstoßrichtung 102 betrachtet mit dem Zylinder 120 überlappen, insbesondere an radial gegenüberliegenden Seiten des axialen Endes des Zylinders 120 an der Unterseite des Zylinderkopfes 151. Flüssiggaskraftstoff kann somit seitlich von oben (rechts) über das Einlassventil 122 in den zylindrischen Hohlraum 109 angesaugt und seitlich oben (links) über das Auslassventil 124 aus dem Zylinder 120 ausgestoßen werden. Die Einlassventile 112, 122 können nur öffnen, wenn der Kolben 111, 121 sich in die Ansaugrichtung 101 bewegt, und können nur schließen, wenn sich der Kolben 111, 121 in die Ausstoßrichtung 102 bewegt, so dass das gepumpte Fluid nur in eine Richtung fließen kann. Die Auslassventile 114, 124 funktionieren genau umgekehrt. Die Einlass- und Auslassventile umfassen jeweils eine Federaufnahme 165, eine Druckfeder 166 und einen Dichtkegel 167, der durch die Druckfeder auf einen Dichtring 168, insbesondere O-Ring, gepresst wird. Bevorzugt ist der Dichtring 168 über einen Dichtring gestülpt. Ein zylindrische Distanzhülse 169 des Einlassventils 112, 122 weist radiale Öffnungen 187 zum Verbinden mit dem Einlasskanal 104 auf und die zylindrische Distanzhülse 169 des Auslassventils 114, 124 weist radiale Öffnungen 187 zum Auslasskanal 106 auf. Ein kompakter Aufbau wird so ermöglicht. Die Distanzhülse 169 wird durch eine Verschlussschraube 164 fixiert und mittels O-Ring abgedichtet.

Die Zylinderstange 127 verbindet den Kolben 121 direkt mit dem Führungselement 128 und durchquert dazu den Trennungsblock 153, der mithilfe der Dichtungseinrichtung 140 gegenüber der zylinderförmigen, länglichen Zylinderstange 127 abgedichtet ist, und zwar insbesondere stärker als die Kolbendichtung 123, 125 in Bezug auf Flüssiggaskraftstoff in der flüssigen und gasförmigen Phase. Die vergrößerte Ansicht in Figur 3a, die in gleicher Weise für die Ausgestaltung der Fig. 3b gilt, zeigt die selbst nachstellende Dichtungseinheit in Form eines Dachmanschettensatz 141, insbesondere aus PTFE, zwischen einem Druckring 180 und einem Stützring 181. Eine multigewellte Federscheibe 183 drückt mit dem unteren Ende gegen den Druckring 180 und spannt auf Weise den Dichtmanschettensatz 141, der dadurch gestaucht wird und sich durch die V-Form der einzelnen Manschetten des Dichtmanschettensatz 141 aufspreizt. Hierdurch verkeilt sich der Dichtmanschettensatz 141 einerseits axial in der Bohrung 186 und andererseits mit der Zylinderstange 127. Das entgegengesetzte, obere Ende der Federscheibe 183 wird axial durch einen Sicherungsring 182 fixiert, der radial in einer zylindrischen Bohrung 186 im Trennungsblock 153 verankert ist, insbesondere durch Einsetzen in eine umlaufende Nut in der Bohrung 186. Ein oder zwei Passscheiben 184 sind zur Vergrößerung der Auflagefläche oberhalb und/oder unterhalb der Federscheibe 183 angeordnet. In einer Ausgestaltung ist die Dichtungseinrichtung 140 so eingerichtet, dass die Federscheibe 183 einen Mindestdruck von 0,8 N/mm² auf den Dichtmanschettensatz 141 ausübt. Eine zuverlässige Dichtwirkung kann so erzielt werden, die insbesondere größer ist als die Dichtwirkung der Kolbendichtung 123, 125. Ebenfalls vergrößert dargestellt ist das Gehäusedichtelement 142 zum Abdichten des Trennungsblocks 153 gegen den Zylinderblock 152.

Das Führungselement 118, 128 weist bevorzugt eine Spielpassung zur Führung 119, 129 auf. Das Führungselement 118, 128 weisen jedoch bevorzugt keine Dichtung gegenüber der Führung 119, 129 auf. Das Schmiermittel kann daher den Spalt zwischen den Führungselementen 118, 128 und den Führungen 119, 129 ungehindert passieren. Das Führungselement 118, 128 weist bevorzugt einen insbesondere axialen Durchgang 107 zum Durchlassen von Schmiermittel auf. Insbesondere befindet sich in dem Durchgang 107 ein Ventil 108, das sich vorzugsweise bei einer Bewegung des Kolbens 111, 121 in Ausstoßrichtung 102 öffnen und bei einer Bewegung des Kolbens 111, 121 in Ansaugrichtung 101 schließen. Durch die Bewegung des Kolbens 111, 121 in Ansaugrichtung 101 entsteht ein Sog, der bewirkt, dass Schmiermittel durch den Spalt zwischen dem Führungselement 118, 128 und der Führung 119, 129 nach oben gesaugt wird. Falls eine Versorgungsleitung 185 für Schmiermittel vorgesehen ist, bewirkt der Sog ferner, dass Schmiermittel über die Versorgungsleitung 185 von einem Schmiermittelbad am Boden des Kurbelgehäuseinnerraums 158 in einen oberen Bereich der Führung 119, 129 gesaugt wird. Der obere Bereich liegt oberhalb des Führungselements 118, 128, wenn sich das Führungselement 118, 128 in Ansaugrichtung bewegt. Das über die Versorgungsleitung 185 angesaugte Schmiermitte tritt dann oberhalb des Führungselements 118, 128 und unterhalb des Trennungsblockes 153 in die Führung 119, 129 ein. Insbesondere ist in der Versorgungsleitung 185 ein Ventil 108 integriert, dass sich nur bei der oben beschriebenen Saugkraft öffnet. Das Ventil 108 des Führungselements 118, 128 und/oder der Versorgungsleitung sind bevorzugt Rückschlagventile.

Das Getriebe 170 zum Übertragen eines Drehmoments von der Antriebswelleneinheit 133 auf die Kurbelwelle 131 umfasst insbesondere ein Stirnradpaar, insbesondere mit einem Ritzel 171 der Antriebswelleneinheit 133 und einem damit im Eingriff stehenden Stirnrad 172 der Kurbelwelle 131. Das Stirnrad 172 hat einen mindestens doppelten oder dreifachen Durchmesser verglichen mit dem Ritzel 171. Das Ritzel 171 ist insbesondere mit der Nabe der Welle-Nabe-Verbindung 139 verbunden, welche wiederrum mit dem Antrieb 130 verbunden ist. Die Pleuelstange 116, 126 ist mithilfe eines Hubzapfens 173 außermittig an die Kurbelwelle 131 drehbar beweglich angebracht.

Die Figuren 4a und 4b illustrieren den Aufbau der Überstromschutzeinrichtung 160, 161, die bevorzugt durch einen Überströmleitungskanal 160 mit einem integrierten Überstromschutzventil 161 gebildet wird.

In Figur 4a, die einen Längsschnitt durch die Ebene C-C zeigt, wird der Auslasskanal 106 über das Überstromschutzventil 161 mit dem Einlasskanal 104 verbunden. In der bevorzugten Ausgestaltung der Figur 1b, die einen Querschnitt durch die Ebene D-D zeigt, wird der Ausgang 190 über das Überstromschutzventil 161 mit dem Auslasskanal 106 verbunden

Das Überstromschutzventil 161 setzt sich im Wesentlichen zusammen aus einem Dichtring 168, einem Dichtkegel 167, einer Distanzhülse 169, einer Druckfeder 166, einer Federaufnahme 165 und - im Unterschied zu den ähnlich aufgebauten Einlass- und Auslassventilen - eine am gegenüberliegenden Ende von dem Dichtkegel 167 überstehenden Stellschraube 188 zum Einstellen des Auslösedrucks. Wie bei den Einlass- und Auslassventilen ist auch bei dem Überstromschutzventil 161 das axiale Ende mit dem Dichtkegel 167 genau das Ende, an dem das Ventil bei Überschreiten des Auslösedruckes öffnen, um Flüssiggaskraftstoff einen Durchlass zu gewähren. Der Dichtkegel 167 wird dann gegen die Federkraft der Druckfeder 166 von dem Dichtring 168 gelöst, so dass ein Fluid in das Ventil strömen kann. Liegt jedoch ein höherer Druck von der entgegengesetzten Richtung an, als in Richtung der Federkraft der Druckfeder 166, wird der Dichtkegel 167 auf den Dichtring 168 gedrückt und dichtet ab. Im Unterscheid zu den Einlass- und Auslassventilen ist der Auslösedruck bei dem Überstromschutzventil 161 um ein Vielfaches größer. Insbesondere ist das Überstromschutzventil 161 radial abgedichtet, bevorzugt mit O-Ringen aus NBR 70.

Wie oben erwähnt ist in Figur 4a ein mittiger Längsschnitt durch den Einlasskanal 104 und den Auslasskanal 106 gezeigt. Zu erkennen sind das motorzugewandtes Einlassventil 122 und das motorzugewandtes Auslassventil 124 der motorzugewandten Pumpeinheit 136. Das motorabgewandte Einlassventil 112 und das motorabgewandte Auslassventil 114 der motorabgewandten Pumpeinheit 135 sind daher nicht zu sehen und befinden sich genau gegenüberliegend in der abgeschnittenen Hälfte des gezeigten Einlasskanals 104 und Auslasskanals 106. Der Aufbau ist bei der nicht sichtbaren Pumpeinheit 135 analog zur gezeigten Pumpeinheit 136 , wie auch die Querschnittsansicht der Figur 4b zeigt. Beide Einlassventile 112, 122 treffen in dem Einlasskanal 104 zusammen und beide Auslassventile 114, 124 treffen in dem Auslasskanal 106 zusammen.

Der Überströmleitungskanal 160 verbindet den Auslasskanal 106 direkt mit dem Einlasskanal 104 (Fig. 4a) oder dem Ausgang 190 (Fig. 4b), insbesondere auf einem nahezu kürzesten und direktesten Weg durch den Zylinderkopf 151. Das Überstromschutzventil 161 ist in dem Überströmleitungskanal 160 integriert und/oder steuert den Durchlass von Flüssiggaskraftstoff in der flüssigen und gasförmigen Phase durch den Überströmleitungskanal 160. Bevorzugt ist das Überstromschutzventil 161 axial ausgerichtet, um eine kompakte Bauweise und einfache Zugänglichkeit zum Einstellen des Auslösedrucks zu ermöglichen. Öffnungen 187 in der Distanzhülse 169 sind vorgesehen, um den Einlasskanal 104 (Fig. 4a) oder einen Ausgangskanal 192, der zum Ausgang 190 führt, mit dem Inneren des Überstromschutzventils 161 zu verbinden. Die Öffnungen 187 haben einen mindestens zweimal oder dreimal geringeren Durchmesser wie der Einlasskanal 104 bzw. der Ausgangskanal 192. Um eine besonders hohe Durchflussrate zu erzielen, ist eine ringförmige Aussparung um den Abschnitt des Überstromschutzventils 161 mit den Öffnungen 187 herum vorgesehen, um durch alle in Umfangrichtung vorgesehenen Öffnungen 187 mit dem Einlasskanal 104 bzw. mit dem Ausgangskanal 192 zu verbinden. Bevorzugt hat der Einlasskanal 104 bzw. Ausgangskanal 192 einen gleichen Durchmesser kleiner oder gleich dem Durchmesser des Auslasskanals 106.

Flüssiggaskraftstoff, der in Fig. 4a über den Einlass 103 in den Einlasskanal 104 strömt oder in Fig. 4b sich im Ausgangskanal 192 befindet, kann aufgrund des Überstromschutzventils 161 nicht durch den Überströmleitungskanal 160 zum Auslasskanal 106 gelangen. Der Flüssiggaskraftstoff gelangt zwar durch die radialen Öffnungen 187 in der Distanzhülse 169 in das Überstromschutzventil 161, jedoch kommt es nicht an dem Dichtkegel 167 vorbei, der dicht gegen den Dichtring 168 gepresst wird.

Somit kann der Flüssiggaskraftstoff insbesondere von der Fluidquelle oder dem Vorratstank nur durch eines der Einlassventile 112, 122 strömen, und zwar grundsätzlich in das Einlassventil 112, 122 der Pumpeinheit 135, 136 mit dem niedrigeren Druck im Zylinder 110, 120. Der Antrieb 130, der insbesondere einen Elektromotor umfasst, treibt den Kolben 111, 121 für ein Komprimieren des Flüssiggaskraftstoffes in dem Zylinder 110, 120 an, so dass der Flüssiggaskraftstoff mit einem höheren Druck über das Auslassventil 114, 124 weiter in den Auslasskanal 106 strömt. Von dort kann der Flüssiggaskraftstoff sowohl in Richtung Auslass 105 als auch in den Überströmleitungskanal 160 zum Überstromschutzventil 161 strömen. Das Überstromschutzventil 161 öffnet jedoch erst ab dem eingestellten Auslösedruck und gleicht den Druck an. Das Überstromschutzventil 161 öffnet also nur dann, wenn der Druck im Auslasskanal 106, der zum Druck am Auslass 105 korrespondiert, den Auslösedruck zuzüglich des Druckes am Einlasskanal 104 (Fig. 4a) bzw. am Ausgangskanal 192 (Fig. 4b) erreicht hat. Der Druck am Einlasskanal 104 ist normalerweise vernachlässigbar gegenüber dem maximalen Betriebsdruck. Auch der Druck am Ausgangskanal 192 der bevorzugten Ausgestaltung der Fig. 4b, der insbesondere dem Druck der Fluidquelle oder des Vorratstanks entspricht, ist normalerweise vernachlässigbar gegenüber dem maximalen Betriebsdruck. Der Auslösedruck ist bevorzugt mindestens 1 bar oder 2 bar unterhalb des maximalen Betriebsdruck der Kolbenpumpe eingestellt. Der maximale Betriebsdruck der Kolbenpumpe ist z.B. 25 bar und der eingestellte Auslösedruck z.B. 23 bar oder 24 bar.

Bei der Ausgestaltung der Fig. 4a strömt bei Erreichen des Auslösedrucks der Flüssiggaskraftstoff von dem Auslasskanal 106 über den Überströmleitungskanal 160 durch das geöffnete Überstromschutzventil 161 zum Einlasskanal 104 und von dort in wenigstens einen der Zylinder 110, 120, insbesondere in denjenigen Zylinder 110, 120 mit dem geringeren Druck. Der Flüssiggaskraftstoff wird in dem Zylinder erneut komprimiert und zum Auslasskanal 106 befördert. Wenn dort dann immer noch höherer Druck als der Auslösedruck des Überstromschutzventils 161 herrscht, zirkuliert der Flüssiggaskraftstoff auf oben beschriebene Art und Weise weiter zwischen den beiden Zylindern 110, 120 hin und her und zwar solange, bis am Auslass 105 der Druck unterhalb des Auslösedruckes des Überstromschutzventils 161 gefallen ist und wieder Flüssiggaskraftstoff vom angeschlossenen Verbraucher abgenommen wird.

Bei der bevorzugten Ausgestaltung der Fig. 4b strömt bei Erreichen des Auslösedrucks der Flüssiggaskraftstoff von dem Auslasskanal 106 über den Überströmleitungskanal 160 durch das geöffnete Überstromschutzventil 161 zum Ausgangskanal 192 und von dort nach außerhalb des Kolbenpumpe 100, insbesondere zurück zum Vorratstank, aus dem der Flüssiggaskraftstoff zum Einlass 103 der Kolbenpumpe 100 strömt. Hierdurch kein das Zirkulieren innerhalb der Kolbenpumpe gemäß der Ausgestaltung der Fig. 4a vermieden werden, dass zu einem Aufheizen des Flüssiggaskraftstoff führen kann.

Flüssiggaskraftstoffe sind neben LPG beispielsweise Erdgas oder Flüssiggase wie Methan.

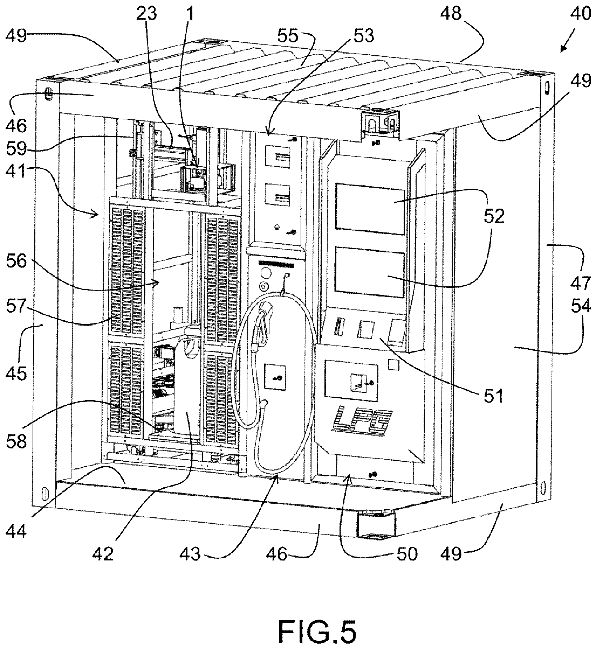

Die Figur 5 zeigt eine Abfüllstation 40 umfassend eine Fülleinrichtung 41 für ein automatisiertes Befüllen einer in der Abfüllstation eingesetzten Gasflasche 42, und eine optional vorgesehene Fülleinrichtung 43 für ein Betanken eines Kraftfahrzeuges. Die Fülleinrichtung 41 für ein automatisiertes Befüllen einer in der Abfüllstation 40 eingesetzten Gasflasche 42 ist vorzugsweise benachbart zur optional vorhandenen Fülleinrichtung 43 für ein Betanken eines Kraftfahrzeuges angeordnet. Vor den beiden Fülleinrichtungen 42 und 43 gibt es eine begehbare Plattform 44, die durch eine aus Stahl bestehende Platte bereitgestellt ist. Die begehbare Plattform 44 ist vorzugsweise 80 cm bis 140 cm breit und 150 cm bis 250 cm lang.

Von der Plattform stehen vorzugsweise zwei Träger 45 senkrecht nach oben ab. Die beiden Träger 45 sind vorzugsweise beim Außenrand der Plattform 44 zwar an den beiden Ecken des Außenrands. Die beiden Träger 45 sind vorzugsweise Teil eines aus Trägern gebildeten Rahmens, der einen unteren und einen oberen horizontal verlaufenden Träger 46 umfasst. Der untere horizontal verlaufende Träger 46 kann zwei durchgehende Öffnungen für eine Gabel eines Gabelstaplers aufweisen, um die Abfüllstation 40 transportieren zu können.

An der Rückseite gibt es vorzugsweise einen gleich oder ähnlich gebauten Rahmen mit vertikal verlaufenden seitlichen und horizontal verlaufenden oberen und unteren Trägern 47 und 48. Die Ecken der beiden Rahmen sind vorzugsweise durch insgesamt vier Längsträger 49 miteinander verbunden. Insgesamt kann so ein Käfig bereitgestellt werden, der die Abfüllstation 40 schützt. Sämtliche Träger 45 bis 49 bestehen vorzugsweise aus Stahl und weisen vorzugsweise ein quadratisches oder rechteckiges Hohlprofil im Querschnitt auf. Enden der Träger 45 bis 49 können entsprechend miteinander verschweißt und/oder miteinander verschraubt und/oder vernietet und so miteinander verbunden sein, um die Stabilität zu verbessern.

Die begehbare Plattform 44 befindet sich vorzugsweise oberhalb des unteren horizontal verlaufenden Trägers 46 und liegt auf diesem vorzugsweise auf. Außerdem liegt die begehbare Plattform 44 vorzugsweise auf seitlichen unteren Längsträgern 49 auf. Die Plattform 44 ist an diesen Trägern 46 und/oder 50 vorzugsweise befestigt, so zum Beispiel durch eine Schraubverbindung oder eine Nietverbindung.

Die beiden Fülleinrichtungen 41 und 43 sind vorteilhaft Baueinheiten, die getrennt voreinander nach vorne herausgezogen werden können und zwar vorzugsweise in die Richtung, von der aus die Fülleinrichtungen 41 und 43 für einen Benutzer erreichbar sind. Um dies zu erleichtern, weisen die Fülleinrichtungen 41 und 43 auf der Unterseite vorzugsweise Rollen auf und stehen auf einem Untergrund auf, der mit der begehbaren Plattform 44 eine gemeinsame ebene Oberfläche bilden kann. Um den Untergrund und die begehbare Plattform 44 bereitzustellen, kann eine gemeinsame, beispielsweise aus Stahl bestehende Platte vorgesehen sein. Es kann aber auch eine Mehrzahl von Platten vorhanden sein, die entsprechend zusammengesetzt sind. Auch der Untergrund liegt auf den unteren Trägern 48 und/oder 49 vorteilhaft entsprechend auf und ist an diesen insbesondere befestigt, so zum Beispiel verschraubt, vernietet und/oder verschweißt. Es kann eine weitere, vorzugsweise durch Rollen rollbar gelagerte, nach vorne herausziehbare Baueinheit 50 geben, die eine Bedien- und Zahleinrichtung 51 sowie ein oder mehrere Displays 52 umfassen kann. Auch die Baueinheit 50 befindet sich vorzugsweise auf dem Untergrund.

Darüber hinaus gibt es vorteilhaft eine weitere Baueinheit 53, die die Steuerungseinrichtung der Abfüllstation 40 umfassen kann. Da eine solche weitere Baueinheit 53 dann klein gehalten werden kann, befindet sie sich vorzugsweise in einem oberen Bereich, beispielsweise oberhalb einer Fülleinrichtung 43 für ein Tanken eines Kraftfahrzeugs und kann ebenfalls nach vorne herausgezogen werden. Sämtliche Baueinheiten 41, 43, 50 und 53 befinden sich vorteilhaft in einem begehbaren Maschinenraum, der zwei Seitenwände 54 und eine Decke 55 umfasst. Nach unten hin ist der begehbare Raum beispielsweise durch den Untergrund begrenzt. Der begehbare Maschinenraum umfasst ferner vorteilhaft eine Rückwand auf der Rückseite, die mit einer abschließbaren Tür versehen sein kann. Sämtliche aus dem begehbaren Maschinenraum nach vorne herausnehmbare Baueinheiten 41, 43, 50 und 53 sind weniger tief als der begehbare Maschinenraum. Über die genannte Tür hindurch, die sich auch in einer Seitenwand 54 befinden kann, kann daher der begehbare Maschinenraum betreten werden. Montagearbeiten auf der Rückseite der Baueinheiten 41, 43, 50 und 53 sind so möglich. Außerdem sind die Rückseiten der herausnehmbaren Baueinheiten 41, 43, 50 und 53 vor einem unbefugten Zugriff geschützt, wenn die Tür abgeschlossen ist. Die herausnehmbaren Baueinheiten 41, 43, 50 und 53 sind beispielsweise durch Riegel befestigt. Im befestigten Zustand können die Baueinheiten nicht herausgenommen werden. Die Riegel können mithilfe von Werkzeug zerstörungsfrei insbesondere nur vom begehbaren Maschinenraum aus gelöst werden. Im Anschluss daran kann eine entsprechende Baueinheit herausgenommen und beispielsweise ausgetauscht werden. Defekte können so sehr schnell behoben werden.

Die Fülleinrichtung 41, die für ein Befüllen einer eingesetzten Gasflasche 42 vorgesehen ist, weist vorteilhaft einen Innenraum 56 für ein Einsetzen einer Gasflasche 42 auf. Der Innenraum 56 kann durch zumindest eine Tür 57, beispielsweise eine Schiebetür oder einen Rolladen, vollständig verschlossen werden und zwar vorzugsweise gasdicht. Die Tür 57 bzw. der Rollladen werden vorzugsweise automatisch und durch eine Steuereinrichtung der Abfüllstation gesteuert geöffnet und geschlossen. Im Innenraum 56 befindet sich ein Teller 58, auf den eine Gasflasche 42 abgestellt werden kann. Im Innenraum 56 befindet sich ein bewegbarer Kopf 1, über den eine eingesetzte Gasflasche 42 mit Gas gefüllt werden kann. Über den bewegbaren Kopf 1 kann Gas aus einer Gasflasche abgesaugt werden.

Der Kopf 1 kann mit dem Träger 23 an einer Schiene 59 der Baueinheit 41 befestigt sein. Der Träger 23 kann vorzugsweise entlang der Schiene 59 durch einen elektrischen Antrieb hoch und runter bewegt werden, um so den Kopf 1 hoch und runter bewegen zu können. Vorteilhaft befindet sich der Kopf 1 in einer Ausgangsstellung oberhalb der ein oder mehreren Türen 57, um durch das Einsetzen einer Gasflasche keinesfalls beschädigt werden zu können. Oberhalb der ein oder mehreren Türen 57 gibt es grundsätzlich eine nicht dargestellte Abdeckung, sodass der Kopf 1 für einen Benutzer praktisch nicht erreichbar ist. Für ein Füllen einer eingesetzten Gasflasche wird der Kopf 1 nach unten in Richtung seiner Abfüllstellung verfahren. Der Kopf verbindet sich dann automatisiert gasdicht mit der Armatur einer eingesetzten Gasflasche und öffnet automatisiert ein Ventil in der Armatur einer eingesetzten Gasflasche. Anschließend kann mithilfe der Kolbenpumpe eine eingesetzte Gasflasche mit Gas gefüllt werden oder es kann Gas aus der eingesetzten Gasflasche abgepumpt werden.

Eine Abfüllstation, wie diese anhand der Figur 5 beschrieben wurde, umfasst also die erfindungsgemäße Kolbenpumpe, vorzugsweise wie in den Fig. 1a, 1b, 2a, 2b, 3a, 3b und 4a, 4b gezeigt, um Gasflaschen mit hoher Geschwindigkeit automatisiert füllen zu können und außerdem Gas mit hoher Geschwindigkeit absaugen zu können, ohne dass ein Austreten von Gas aus der Kolbenpumpe zu befürchten ist. Zugleich kann die Kolbenpumpe dazu genutzt werden, um mit hoher Geschwindigkeit eine Kraftfahrzeug mit Gas zu betanken, wenn die Abfüllstation eine entsprechende Fülleinrichtung für Kraftfahrzeuge umfasst.

Die Kolbenpumpe ist in einer Ausgestaltung im Maschinenraum der Abfülleinrichtung untergebracht und damit gut geschützt. Die Kolbenpumpe kann aber auch außerhalb des Maschinenraums vorhanden sein, so zum Beispiel bei einem nicht gezeigten Tank oder Vorratstank für Flüssiggas, der sich außerhalb der Abfüllstation befindet.

Da die Kolbenpumpe extremen Temperaturschwankungen ausgesetzt sein kann, wird als Antrieb für die Kolbenpumpe vorteilhaft ein Elektromotor eingesetzt. Dies ist vor allem auch deshalb möglich, weil die Kolbenpumpe erfindungsgemäß so konstruiert werden kann, dass kein Gasaustritt aus der Kolbenpumpe zu befürchten steht, so dass ein unbeaufsichtigter Betrieb möglich ist.

Um nur eine Pumpe vorsehen zu müssen, umfasst die Abfüllstation vorzugsweise die beschriebene Stelleinheit, die ein Umstellen von einem Pumpbetrieb zu einem Saugbetrieb sowie ein Umstellen von einem Saugbetrieb zu einem Pumpbetrieb erlaubt. Insbesondere hat die Kolbenpumpe wie in den Figuren 1 bis 4 gezeigt einen maximalen Hubweg von mindestens 40 mm und/oder höchstens 50 mm, und/oder eine Gesamthöhe in axialer Richtung von min. 400mm und/oder höchstens 800mm, bevorzugt höchstens 500 mm. Eine Abfüllstation wie in Fig. 5 dargestellt kann so besonders kompakt und mit geringem Aufwand bereitgestellt werden.

### Bezugszeichenliste:

1 Kopf
23 Träger
40 Abfüllstation
41 Fülleinrichtung für Gasflasche
42 Gasflasche
43 Fülleinrichtung für Kraftfahrzeug
44 begehbare Plattform
45-49 Träger
50 Baueinheit
51 Bedien- und Zahleinrichtung
52 Display
53 Baueinheit
54 Seitenwand
55 Decke
56 Innenraum
57 Tür
58 Teller
59 Schiene
100 Kolbenpumpe
101 Ansaugrichtung
102 Ausstoßrichtung
103 Einlass
104 Einlasskanal
105 Auslass
106 Auslasskanal
107 Durchgang des Führungselements
108 Ventil des Führungselements
109 zylindrischer Hohlraum
110 motorabgewandter Zylinder
111 motorabgewandter Kolben
112 motorabgewandtes Einlassventil
113 erster Dichtring des motorabgewandten Kolbens
114 motorabgewandtes Auslassventil
115 zweiter Dichtring des motorabgewandten Kolbens
116 motorabgewandte Pleuelstange
117 motorabgewandte Zylinderstange
118 motorabgewandtes Führungselement
119 motorabgewandte Führung
120 motorzugewandter Zylinder
121 motorzugewandter Kolben
122 motorzugewandtes Einlassventil
123 Dichtring des motorzugewandten Kolbens
124 motorzugewandtes Auslassventil
125 Dichtungsführungsband des motorzugewandten Kolbens
126 motorzugewandte Pleuelstange
127 motorzugewandte Zylinderstange
128 motorzugewandtes Führungselement
129 motorzugewandte Führung
130 Antrieb
131 Kurbelwelle
132 Anschlussöffnung für den Antrieb
133 Antriebswelleneinheit
134 X-Ring
135 motorabgewandte Pumpeinheit
136 motorzugewandte Pumpeinheit
137 Winkellasche
138 Untergrund
139 Welle-Nabe-Verbindung
140 Dichtungseinrichtung
141 Dachmanschettensatz
142 Gehäusedichtelement
143 Dichtstopfen
144 Entlüftungsschraube
145 Schauglas
146 Drehlager
147 Gelenk
148 Verschlussscheibe
149 maximaler Hubweg
150 Gehäuse
151 Zylinderkopf
152 Zylinderblock
153 Trennungsblock
154 Führungsblock
155 Kurbelgehäuse-Oberteil
156 Kurbelgehäuse-Unterteil
157 Kurbelgehäuse-Flanschteil
158 Kurbelgehäuseinnenraum
159 Gehäuseschraube
160 Überströmleitungskanal
161 Überstromschutzventil
164 Verschlussschraube
165 Federaufnahme
166 Druckfeder
167 Dichtkegel
168 Dichtring
169 Distanzhülse
170 Getriebe
171 Ritzel
172 Stirnrad
173 Hubzapfen
180 Druckring
181 Stützring
182 Sicherungsring
183 Federscheibe
184 Passscheibe
185 Bohrung
186 Versorgungsleitung
187 Öffnung
188 Stellschraube
189 Dichtschraube
190 Ausgang
191 Transportanker
192 Ausgangskanal

## Patentansprüche

1. Kolbenpumpe (100) zum Pumpen eines Flüssiggaskraftstoffes, insbesondere LPG, mit einem Zylinder (110, 120) und einem Kolben (111, 121), wobei der Kolben (111, 121) im Zylinder (110, 120) angeordnet ist, um zusammen mit dem Zylinder (110, 120) einen zylindrischen Hohlraum (109) zu begrenzen, dessen Volumen sich durch eine axiale Bewegung des Kolbens (111, 121) innerhalb des Zylinders (110, 120) in eine Ausstoßrichtung (102) verkleinert und in eine entgegengesetzte Ansaugrichtung (101) vergrößert, wobei der zylindrische Hohlraum (109) über ein Einlassventil (112, 122) mit einem Einlass (103) und über ein Auslassventil (114, 124) mit einem Auslass (105) verbunden ist, wobei ein Antrieb (130) vorgesehen ist, der über eine Kurbelwelle (131), eine Pleuelstange (116, 126) und eine längliche Zylinderstange (117, 127) den Kolben (111, 121) für die axiale Bewegung antreiben kann, wobei die Zylinderstange (117, 127) ein radiales Führungselement (118, 128) aufweist und eine Führung (119, 129) zum axialen, linearen Führen des Führungselements (118, 128) eingerichtet ist, so dass die Zylinderstange (117, 127) sich nur axial in die Ausstoßrichtung (102) oder die Ansaugrichtung (101) bewegen kann, **dadurch gekennzeichnet, dass** die Führung (119, 129) in Ausstoßrichtung (102) geschlossen und in Ansaugrichtung (101) offen ist.

2. Kolbenpumpe (100) nach dem vorhergehenden Anspruch, **dadurch gekennzeichnet, dass** die Kolbenpumpe (100) so eingerichtet ist, dass ein Medium, das mit dem Führungselement (118, 128) direkt in Kontakt steht, axial durch das Führungselement (118, 128) hindurch oder radial an dem Führungselement (118, 128) vorbei geleitet wird, wenn sich das Führungselement (118, 128) axial bewegt.

3. Kolbenpumpe (100) nach einem der vorhergehenden Ansprüche, **dadurch gekennzeichnet, dass** eine Dichtungseinrichtung (140) axial zwischen dem Führungselement (118, 128) und dem Kolben (111, 121) angeordnet ist, um den Zylinder (110, 120) gegenüber der Zylinderstange (117, 127) abzudichten.

4. Kolbenpumpe (100) nach dem vorhergehenden Anspruch, **dadurch gekennzeichnet, dass** die Dichtungseinrichtung (140) eine selbst nachstehende Dichtungseinheit umfasst, insbesondere einen Dachmanschettensatz (141).

5. Kolbenpumpe (100) nach einem der vorhergehenden Ansprüche, **dadurch gekennzeichnet, dass** ein Gehäuse (150) der Kolbenpumpe (100) einen separaten Trennungsblock (153) zwischen einem Zylinderblock (152) mit dem Zylinder (110, 120) und einem Führungsblock (154) mit der Führung (119, 129) vorsieht, die miteinander in axialer Richtung bewegungsfest verbunden sind.

6. Kolbenpumpe (100) nach einem der drei vorhergehenden Ansprüche, **dadurch gekennzeichnet, dass** die Dichtungseinrichtung (140) stärker gegenüber der Zylinderstange (117, 127) abdichtet als eine Kolbendichtung (113, 115, 123, 125) den Kolben (111, 121) gegenüber dem Zylinder (110, 120).

7. Kolbenpumpe (100) nach einem der vorhergehenden Ansprüche, **dadurch gekennzeichnet, dass** das Führungselement (118, 128) ein Ventil (108) zum Steuern eines axialen Durchflusses des Mediums aufweist und/oder die Kolbenpumpe (100) ein axiales Durchlassen des Mediums durch das Führungselement (118, 128) hindurch nur in eine axiale Richtung erlaubt.

8. Kolbenpumpe (100) nach Anspruch 3 oder 4, **dadurch gekennzeichnet, dass** die Führung (119, 129) in Ausstoßrichtung (102) durch die Dichtungseinrichtung (140) abgedichtet ist.

9. Kolbenpumpe (100) nach einem der vorhergehenden Ansprüche, **dadurch gekennzeichnet, dass** die Führung (119, 129) in Ansaugrichtung (101) in einen Kurbelgehäuseinnenraum (158) übergeht und/oder eine Anschlussöffnung (132) zum Kurbelgehäuseinnenraum (158) gegenüber einer darin aufgenommenen Antriebswelleneinheit (133) zum Übertragen einer Antriebskraft von dem Antrieb (130) auf die Kurbelwelle (131) mithilfe eines X-Rings (134) abgedichtet ist.

10. Kolbenpumpe (100) nach einem der vorhergehenden Ansprüche, **dadurch gekennzeichnet, dass** das Führungselement (118, 128) scheibenförmig ist, den gleichen Durchmesser wie der Kolben (111, 121) hat und/oder eine geringere axiale Länge als der Kolben (111, 121) hat.

11. Kolbenpumpe (100) nach einem der vorhergehenden Ansprüche, **dadurch gekennzeichnet, dass** das Führungselement (118, 128) steif über die Zylinderstange (117, 127) mit dem Kolben (111, 121) verbunden ist, so dass sich das Führungselement (118, 128), die Zylinderstange (117, 127) und der Kolben (111, 121) in axialer Richtung stets synchron bewegen.

12. Kolbenpumpe (100) nach einem der vorhergehenden Ansprüche, **dadurch gekennzeichnet, dass** zwei separate Pumpeinheiten (135, 136) jeweils mit einem Zylinder (110, 120), einem Kolben (111, 121), einer Zylinderstange (117, 127) und einem Führungselement (118, 128) vorgesehen sind und/oder nur ein Auslass (105) und nur ein Einlass (103) über einen Zylinderkopf (151) mit zwei Zylindern (110, 120) verbunden sind.

13. Kolbenpumpe (100) nach einem der vorhergehenden Ansprüche, **dadurch gekennzeichnet, dass** ein Auslasskanal (106), der den Auslass (105) direkt mit zwei Auslassventilen (114, 124) verbindet, und ein Einlasskanal (104), der den Einlass (103) direkt mit zwei Einlassventilen (112, 122) verbindet, vorhanden sind und/oder ein Überströmleitungskanal (160) mit einem integrierten Überstromschutzventil (161) direkt mit dem Auslasskanal (106) verbunden ist, wobei das Überstromschutzventil (161) einen Auslösedruck zum Öffnen des Überströmleitungskanals (160) unterhalb eines maximalen Betriebsdruckes der Kolbenpumpe (100) aufweist.

14. Abfüllstation (40) für ein Füllen von Gasflaschen mit einer Kolbenpumpe (100) gemäß einem der vorhergehenden Ansprüche, wobei der Antrieb (130) einen Elektromotor umfasst.

## Claims

1. Piston pump (100) for pumping a liquid gas fuel, in particular LPG, having a cylinder (110, 120) and a piston (111, 121), wherein the piston (111, 121) is arranged in the cylinder (110, 120) to delimit a cylindrical cavity (109) together with the cylinder (110, 120), the volume of which reduces by an axial movement of the piston (111, 121) within the cylinder (110, 120) in an ejection direction (102) and increases in an opposite suction direction (101), wherein the cylindrical cavity (109) is connected to an inlet (103) via an inlet valve (112, 122) and to an outlet (105) via an outlet valve (114, 124), wherein a drive (130) is provided which can drive the piston (111, 121) for the axial movement via a crankshaft (131), a connecting rod (116, 126) and an elongated cylinder rod (117, 127), wherein the cylinder rod (117, 127) has a radial guide element (118, 128) and a guide (119, 129) is configured to axially, linearly guide the guide element (118, 128), so that the cylinder rod (117, 127) can only move axially in the ejection direction (102) or the suction direction (101), **characterized in that** the guide (119, 129) is closed in the ejection direction (102) and open in the suction direction (101).

2. Piston pump (100) according to the preceding claim, **characterized in that** the piston pump (100) is configured such that a medium in direct contact with the guide element (118, 128) is directed axially through the guide element (118, 128) or radially past the guide element (118, 128) when the guide element (118, 128) moves axially.

3. Piston pump (100) according to one of the preceding claims, **characterized in that** a seal means (140) is arranged axially between the guide element (118, 128) and the piston (111, 121) to seal the cylinder (110, 120) with respect to the cylinder rod (117, 127).

4. Piston pump (100) according to the preceding claim, **characterized in that** the seal means (140) comprises a self-adjusting seal unit, in particular a V-packing set (141).

5. Piston pump (100) according to one of the preceding claims, **characterized in that** a housing (150) of the piston pump (100) provides a separate separating block (153) between a cylinder block (152) with the cylinder (110, 120) and a guide block (154) with the guide (119, 129), which are connected to each other fixedly against axial movement.

6. Piston pump (100) according to one of the three preceding claims, **characterized in that** the seal means (140) seals more tightly against the cylinder rod (117, 127) than a piston seal (113, 115, 123, 125) seals the piston (111, 121) against the cylinder (110, 120).

7. Piston pump (100) according to one of the preceding claims, **characterized in that** the guide element (118, 128) comprises a valve (108) for controlling an axial flow of the medium and/or the piston pump (100) allows the medium to pass axially through the guide element (118, 128) in an axial direction only.

8. Piston pump (100) according to claim 3 or 4, **characterized in that** the guide (119, 129) is sealed in ejection direction (102) by the seal means (140).

9. Piston pump (100) according to one of the preceding claims, **characterized in that** the guide (119, 129) in suction direction (101) merges into a crankcase interior (158) and/or a connection opening (132) to the crankcase interior (158) is sealed with respect to a drive shaft unit (133) accommodated therein for transmitting a driving force from the drive (130) to the crankshaft (131) by means of an X-ring (134).

10. Piston pump (100) according to one of the preceding claims, **characterized in that** the guide element (118, 128) is disc-shaped, has the same diameter as the piston (111, 121) and/or has a smaller axial length than the piston (111, 121).

11. Piston pump (100) according to one of the preceding claims, **characterized in that** the guide element (118, 128) is rigidly connected to the piston (111, 121) via the cylinder rod (117, 127), so that the guide element (118, 128), the cylinder rod (117, 127) and the piston (111, 121) always move synchronously in the axial direction.

12. Piston pump (100) according to one of the preceding claims, **characterized in that** two separate pumping units (135, 136) each having a cylinder (110, 120), a piston (111, 121), a cylinder rod (117, 127) and a guide element (118, 128) are provided and/or only one outlet (105) and only one inlet (103) are connected to two cylinders (110, 120) via a cylinder head (151).

13. Piston pump (100) according to one of the preceding claims, **characterized in that** an outlet channel (106) connecting the outlet (105) directly to two outlet valves (114, 124) and an inlet channel (104) connecting the inlet (103) directly to two inlet valves (112, 122) are provided and/or an overflow conduit channel (160) with an integrated overflow protection valve (161) is directly connected to the outlet channel (106), wherein the overflow protection valve (161) has a trigger pressure for opening the overflow conduit channel (160) below a maximum operating pressure of the piston pump (100).

14. Filling station (40) for filling gas cylinders with a piston pump (100) according to one of the preceding claims, wherein the drive (130) comprises an electric motor.

## Revendications

1. Pompe à piston (100) pour pomper un carburant de gaz liquéfié, en particulier du GPL, comprenant un cylindre (110, 120) et un piston (121), dans laquelle le piston (111, 121) est disposé dans le cylindre (110, 120) pour délimiter, avec le cylindre (110, 120), une cavité cylindrique (109) dont le volume diminue sous l'effet d'un mouvement axial du piston (111, 121) à l'intérieur du cylindre (110, 120) dans une direction d'éjection (102) et augmente dans une direction d'aspiration opposée (101), dans laquelle la cavité cylindrique (109) est reliée à une entrée (103) par une soupape d'admission (112, 122) et à une sortie (105) par une soupape d'échappement (114, 124), dans laquelle il est prévu un entraînement (130) qui peut entraîner le piston (113, 121) pour le mouvement axial par l'intermédiaire d'un vilebrequin (131), d'une bielle (116, 126) et d'une tige de cylindre allongée (117, 127), dans laquelle la tige de cylindre (117, 127) comporte un élément de guidage radial (118, 128) et un guide (119, 129) est adapté pour le déplacement axial, linéaire de l'élément de guidage (118, 128), de sorte que la tige de cylindre (117, 127) ne peut se déplacer qu'axialement dans la direction d'éjection (102) ou la direction d'aspiration (101), **caractérisée en ce que** le guide (119, 129) est fermé dans la direction d'éjection (102) et ouvert dans la direction d'aspiration (101).

2. Pompe à piston (100) selon la revendication précédente, **caractérisée en ce que** la pompe à piston (100) est aménagée de sorte qu'un médium qui est en contact direct avec l'élément de guidage (118, 128) est dirigé axialement à travers l'élément de guidage (118, 128) ou radialement au-delà de l'élément de guidage (118, 128) lorsque l'élément de guidage (118, 128) se déplace axialement.

3. Pompe à piston (100) selon l'une des revendications précédentes, **caractérisée en ce qu'**un dispositif d'étanchéité (140) est disposé axialement entre l'élément de guidage (118, 128) et le piston (111, 121) pour assurer l'étanchéité du cylindre (110, 120) par rapport à la tige de cylindre (117, 127).

4. Pompe à piston (100) selon la revendication précédente, **caractérisée en ce que** le dispositif d'étanchéité (140) comprend un ensemble d'étanchéité se réajustant lui-même, notamment un ensemble de manchette de toit (141).

5. Pompe à piston (100) selon l'une des revendications précédentes, **caractérisée en ce qu'**un boîtier (150) de la pompe à piston (100) prévoit un bloc de séparation séparé (153) entre un bloc-cylindres (152) avec le cylindre (110, 120) et un bloc de guidage (154) avec le guide (119, 129), qui sont reliés l'un à l'autre de manière fixe en mouvement dans la direction axiale.

6. Pompe à piston (100) selon l'une des trois revendications précédentes, **caractérisée en ce que** le dispositif d'étanchéité (140) assure une étanchéité plus forte vis-à-vis de la tige de cylindre (117, 127) qu'un joint de piston (113, 115, 123, 125) le piston (111, 121) vis-à-vis du cylindre (110, 120).

7. Pompe à piston (100) selon l'une des revendications précédentes, **caractérisée en ce que** l'élément de guidage (118, 128) comporte une vanne (108) pour le commandement d'un écoulement à travers axial du medium et/ou la pompe à piston (100) permet un passage axial du medium à travers l'élément de guidage (118, 128) uniquement dans une direction axiale.

8. Pompe à piston (100) selon la revendication 3 ou 4, **caractérisée en ce que** le guide (119, 129) est étanchéifié dans la direction d'éjection (102) par le dispositif d'étanchéité (140).

9. Pompe à piston (100) selon l'une des revendications précédentes, **caractérisée en ce que** le guide (119, 129) se prolonge dans un espace intérieur de carter (158) dans le sens de l'aspiration (101) et/ou une ouverture de raccordement (132) à l'espace intérieur de carter (158) est rendue étanche par rapport à une unité d'arbre d'entraînement (133) logée dans celle-ci pour la transmission d'une force d'entraînement de l'entraînement (130) au vilebrequin (131) à l'aide d'une bague en X (134).

10. Pompe à piston (100) selon l'une des revendications précédentes, **caractérisée en ce que** l'élément de guidage (118, 128) est en forme de disque, a le même diamètre que le piston (111, 121) et/ou a une longueur axiale inférieure que le piston (111, 121).

11. Pompe à piston (100) selon l'une des revendications précédentes, **caractérisée en ce que** l'élément de guidage (118, 128) est relié de manière rigide au piston (111, 121) par la tige de cylindre (117, 127), de sorte que l'élément de guidage (118, 128), la tige de cylindre (117, 127) et le piston (111, 121) se déplacent toujours de manière synchrone dans la direction axiale.

12. Pompe à piston (100) selon l'une des revendications précédentes, **caractérisée en ce que** deux unités de pompage séparées (135, 136) sont prévues, chacune avec un cylindre (110, 120), un piston (111, 121), une tige de cylindre (117, 127) et un élément de guidage (118, 128) et/ou seulement une sortie (105) et seulement une entrée (103) sont reliées à deux cylindres (110, 120) par une culasse de cylindre (151).

13. Pompe à piston (100) selon l'une des revendications précédentes, **caractérisée en ce qu'**il existe un canal d'échappement (106) qui relie directement l'échappement (105) à deux soupapes d'échappement (114, 124) et un canal d'admission (104) qui relie directement l'admission (103) à deux soupapes d'admission (112, 122), et/ou un canal de conduite de décharge (160) avec une soupape de protection contre les surintensités (161) intégrée est directement relié au canal de sortie (106), la soupape de protection contre les surintensités (161) dans laquelle la soupape de protection contre les surintensités (161) présente une pression de déclenchement pour ouvrir le canal de conduite de décharge (160) en dessous d'une pression de fonctionnement maximale de la pompe à piston (100).

14. Poste de remplissage (40) pour un remplissage de bouteilles de gaz avec une pompe à piston (100) selon l'une des revendications précédentes, dans lequel l'entraînement (130) comprend un moteur électrique.
